(19)

Europäisches Patentamt
European Patent Office
Office européen des brevets

(11) **EP 3 069 877 A1**

(12) **EUROPEAN PATENT APPLICATION**

(43) Date of publication:
21.09.2016 Bulletin 2016/38

(21) Application number: 16163931.5

(22) Date of filing: 21.05.2014

(51) Int Cl.:
*B32B 27/08* (2006.01)    *B32B 27/30* (2006.01)
*B32B 27/32* (2006.01)    *B29K 23/00* (2006.01)
*B29C 55/02* (2006.01)    *B29C 71/02* (2006.01)
*B29C 55/16* (2006.01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 21.05.2013 FR 1354554

(62) Document number(s) of the earlier application(s) in
accordance with Art. 76 EPC:
14169253.3 / 2 805 821

(71) Applicant: Cryovac, Inc.
Duncan, SC 29334-0464 (US)

(72) Inventors:
• CIOCCA, Paolo
I-28100 Lumellogno (NO) (IT)
• FORLONI, Roberto
I-20017 RHO (MI) (IT)

(74) Representative: Fraire, Cristina
PGA S.r.l.
Via Mascheroni, 31
20145 Milano (IT)

Remarks:
This application was filed on 05-04-2016 as a
divisional application to the application mentioned
under INID code 62.

(54) **GAS-BARRIER HEAT-SHRINKABLE FILM**

(57)    A coextruded heat-shrinkable packaging film, particularly suitable for flowpack or tray lidding packaging applications by bagging, comprising a core layer comprising an ethylene/vinyl alcohol copolymer, two outer polyolefin layers, that may be equal or different, said film being characterized by a ratio between the maximum shrink tension in the transverse direction and the residual cold shrink tension at 5°C in the transverse direction comprised between 0.6 and 1.9 and a maximum shrink tension in the transverse direction not higher than 40 kg/cm$^2$, is disclosed.

The film is obtained by coextrusion, optional irradiation, orientation and annealing under controlled conditions.

FIG.1

**Description**

**TECHNICAL FIELD**

The present invention refers to a coextruded gas-barrier multilayer heat-shrinkable thermoplastic film having shrink properties particularly suitable for its application in the manufacture of packages by bagging on horizontal form-fill-seal machines, these packages commonly being called "flowpack", or as a lidding film for thermoplastic containers. For greater simplicity, the packaging from form-fill-seal machines will be called "so-called flowpack packaging" and the corresponding technique will be called "so-called flowpack application" or "so-called flowpack method".

**BACKGROUND OF THE INVENTION**

Multilayer heat-shrinkable thermoplastic films have being used for packaging various food and non food products to protect them from the environment during storage and distribution.

Said films typically need to combine a number of different properties in order to be fit-for-use in the desired packaging applications.

For packaging of food products, it is often necessary that the film has oxygen barrier characteristics to delay or avoid product oxidation or degradation during its shelf-life. Also for the packaging of non food products it may be sometimes desirable or necessary to prevent as much as possible contact of the packaged products with conventional atmosphere and in such a case a gas-barrier heat-shrinkable film is employed. Several different materials have been used to decrease the oxygen permeability of thermoplastic films. Among these materials, EVOH (ethylene/vinyl alcohol copolymer) is a very good gas barrier material and several gas-barrier thermoplastic films comprising an EVOH layer are thus described in the patent literature.

Good heat sealability is also required as it is essential, particularly for gas-barrier films used in applications where the contained product is to be kept either under vacuum or under a modified atmosphere, that the seals that close the package have adequate strength to guarantee the hermeticity of the package. For some applications such as the so-called flowpack application, the film should be heat-sealable to itself. In said so-called flowpack applications usually a film web runs from a reel through a former which creates a tube where the products are inserted at a suitable distance one from the other and typically gas-flushed, and a sealing system provides for a longitudinal seal to set the tube and for transverse seals at the beginning and at the end of each package.

For other applications, such as for instance tray lidding applications, the film should be sealable to the edges of the lower support, typically tray-shaped, or to a film which in its turn will be sealed to the edges of the lower support, and therefore the composition of the layer that will be employed as the sealant layer will be suitably selected depending on the composition of the tray or the film layer to which it shall be sealed.

In general heat-shrinkability is an appreciated feature of the film as it allows obtaining a tight and appealing package where the excess of packaging material or any looseness therein may disappear due to the shrinkage of the material itself. The heat-shrinkability is imparted to the film by solid-state orientation or stretching of the film, either mono-axially or bi-axially, during film manufacture. In a typical process, the thick structure, which is extruded through either a round or a flat extrusion die, is quickly quenched, then it is heated to a suitable temperature, called the orientation temperature, which is higher than the glass transition temperature (Tg) of the resins used in the film itself but lower than the melting temperature (Tm) of at least one of said resins, and stretched in either or both of the machine longitudinal (direction called LD) and transverse (crosswise direction, called TD) directions. When the thus obtained film is heated, the imparted orientation will allow the film to shrink or, if restrained, to create shrink tension.

In some cases however the shrink properties of the solid-state oriented films have to be carefully controlled, to avoid that the shrinking step might damage or even crush the package or the product. This has been particularly important in the last years as the thickness of the packaging containers (e.g., trays or more generally supports) was significantly reduced to make them more sustainable, often impairing their mechanical properties, in particular their resistance to deformation.

Examples of packaging applications for which it has been desirable to control the film shrink properties are so-called flowpack and tray lidding applications in which heat shrinkable films are used as wrapping or lidding films or for the manufacture of pouches in so-called horizontal flowpack (HFFS) or vertical (VFFS) packaging processes implemented on form-fill-seal machines.

In the so-called flowpack packaging process the product is often positioned within a container, generally a tray, that can be deformed when wrapped up in a gas-barrier film with a too high shrink force. In case of rectangular containers, this deformation mainly occurs along the longest sides, which generally are the weakest sides, of the container. As the film is generally wrapped around the tray keeping its LD direction parallel to its longest side, it is the shrink force developed by the film in TD that is mainly responsible for trays distortion when the shrink of the film occurs.

Also in tray lidding applications, a gas-barrier film having a high free shrink with a reduced shrink force, at least in the transverse direction, has been preferred as it provided a tight package without giving deformation of the tray or a too high stress on the seal putting at risk the hermeticity of the package. Similarly, as the film is generally sealed onto the tray keeping its LD direction parallel to the longest sides of the same, it is the shrink force developed by the film in TD that is mainly responsible for trays distortion and, further, flange deformation.

Specific films known in the packaging art as "soft shrink" films have been developed for these applications. Typically, these solid state oriented films, such as those described in EP729900, EP797507 and WO2011029950, offer relatively high free shrink combined with a relatively low maximum shrink tension.

In the above prior art, three main different strategies to control the film shrinking forces have been applied. In one approach, the total thickness of the films was decreased, thus lowering the force exerted on the package during the shrinking phase. This approach had indeed technical limitations, as the films typically used for these applications were already very thin (usually lower than 30 microns) and further decreasing their thickness would have been detrimental for their tear and abuse resistance, making their processing, converting and use more critical.

Another approach was focused on the modification of the film compositions, as reported in WO2011029950. The films of document WO2011029950 are coextruded, annealed, gas-barrier, heat-shrinkable packaging films suitable for so-called flowpack or tray-lidding applications comprising a core EVOH layer, first and second outer polyolefin layers and at least one inner layer of a copolymer of propylene with butene and optionally with ethylene. The presence of the copolymer of propylene with butene and optionally with ethylene allows controlling the maximum shrink force in the transverse direction and the residual shrink force at room temperature. The resulting shrink properties of the film are suitable to avoid tray distortion and guarantee a good tight appearance at room temperature.

A third possibility to modulate shrinking forces is based on variations introduced into the manufacturing process. In particular, it was found out that it was possible to reduce the maximum value of the shrink tension exerted by the film during the shrinking phase, particularly in the transverse direction, by applying an annealing step immediately after the orientation step, as reported in EP881966.

The Applicant has realized that, even if the mentioned prior art disclose films having a limited maximum shrink tension - suitable to minimize tray deformation during the standard packaging cycle - and a residual shrink tension sufficient to provide for packages tight enough at room temperature, they do not consider and solve some drawbacks that may appear when these packages are stored at lower temperatures (i.e. fridge temperatures, generally at about 4 -5°C).

One common drawback shown by so-called flowpack and lidded packages kept for a while into the refrigerator is the so called "pack relaxation", namely the appearance of antiaesthetical wrinkles and pleats in the packaging film. Pack relaxation is not only undesirable for purely aesthetical reasons - the presence of wrinkles in the film of the package is not attractive per se - but also because it impairs the visual inspection of the packaged product. Especially in case of food products, it is particularly important that the customer is able to check the appearance of the packaged item and any impairment to a clear evaluation of the content (wrinkles, haze etc) may discourage the purchase of the package.

The phenomenon of pack relaxation, after storage of the package in the fridge, is mainly caused by an insufficient residual cold shrink tension of the packaging film but, in addition, it is worsen by certain tray conformations.

In the packages current on the market, pack relaxation at low temperatures is even more recurrent because of a substantial restyling of the trays used in said packages.

In the last years, the downgauging of the containers has been associated with new designs and compositions to allow higher rigidity despite the lower thickness. For example, containers with reinforcing ribs or double or irregular flanges, as those described in WO2010003497 and EP2025596, were provided. For this kind of containers having irregular flanges, which are designed to stand the shrink forces exerted by the shrinking film without giving a significant tray deformation, pack relaxation is more likely to occur.

So in order to avoid pack relaxation it would be desirable to increase the residual cold shrink tension of the film but it must be considered that, on the other side, if the packaging film shows a too high residual cold shrink tension, after storage in the fridge it will deform the package.

The Applicant has understood that the values of residual cold shrink tension and maximum shrink tension of a shrinking film are really critical in order to get packages witch are tight and not distorted even after storage in the fridge. If these shrink parameters are not carefully selected, within optimal ranges, the package will not be attractive to the customer because loose, distorted and in the worst even no more hermetic.

What these optimal values of the above parameters are and, mostly, how to impart them in such a balanced combination to a conventional packaging heat shrinkable film is not taught or mentioned in the packaging art. Therefore there is still the need in the art for gas-barrier films allowing good hermeticity and having very good optics, said films being characterized by optimal shrink properties, namely proper high free shrink values and balanced maximum shrink tension and residual cold shrink tension. Ideally, the shrink behavior of these films should be tailored on the rigidity and design of the container and on the softness of the packaged product.

Said films when used in so-called flowpack or tray lidding applications would result in packages which are devoid of defects, such as tray distortion and pack relaxation, under the whole range of packaging and storing temperature conditions.

It has now been found that it is possible to obtain films endowed with these properties by manufacturing a film structure comprising a core EVOH gas-barrier layer and two polyolefin outer layers under particularly controlled cooling, orientation and annealing conditions as hereinafter described.

SUMMARY OF THE INVENTION

In a first aspect, the present invention is directed to a coextruded gas-barrier heat-shrinkable packaging film comprising

- a core layer (A) comprising an ethylene/vinyl alcohol copolymer,
- two outer polyolefin layers (B) and (C), that may be equal or different,

said film being characterized by a maximum shrink tension in the transverse direction not higher than 40 kg/cm$^2$ and additionally by

i) a residual cold shrink tension at 5°C in the transverse direction comprised between 10 and 27 Kg/cm$^2$, or
ii) a ratio between the maximum shrink tension in the transverse direction and the residual cold shrink tension at 5°C in the transverse direction comprised between 0.6 and 1.9.

In another aspect, the present invention is directed to a coextruded gas-barrier heat-shrinkable packaging film comprising

- a core layer (A) comprising an ethylene/vinyl alcohol copolymer,
- two outer polyolefin layers (B) and (C), that may be equal or different,

said film being characterized by a maximum shrink tension in the transverse direction not higher than 40 kg/cm$^2$ and additionally by

i) a residual cold shrink tension at 5°C in the transverse direction comprised between 10 and 27 Kg/cm$^2$, and/or
ii) a ratio between the maximum shrink tension in the transverse direction and the residual cold shrink tension at 5°C in the transverse direction comprised between 0.6 and 1.9.

In one embodiment of the film according to the invention, the maximum shrink tension in the transverse direction is comprised between 17 kg/cm$^2$ and 40 kg/cm$^2$ and, additionally, i) the residual shrink tension at 5°C in the transverse direction is comprised between 10 kg/cm$^2$ and 27 Kg/cm$^2$.

In one embodiment of the film according to the invention, the maximum shrink tension in the transverse direction is not higher than 40 kg/cm$^2$ and, additionally, i) the residual shrink tension at 5°C in the transverse direction is comprised between 10 and 27 Kg/cm$^2$, and/or ii) the ratio between the maximum shrink tension in the transverse direction and the residual cold shrink tension at 5°C in the transverse direction is comprised between 0.8 and 1.9

In one embodiment of the film according to the invention, the maximum shrink tension in the transverse direction is not higher than 40 kg/cm$^2$ and, additionally, i) the residual shrink tension at 5°C in the transverse direction is comprised between 10 and 27 Kg/cm$^2$, and ii) the ratio between the maximum shrink tension in the transverse direction and the residual cold shrink tension at 5°C in the transverse direction is comprised between 0.8 and 1.9

In one embodiment of the film according to the invention, the maximum shrink tension in the transverse direction is comprised between 23 kg/cm$^2$ and 31 kg/cm$^2$ and additionally, i) the residual cold shrink tension at 5°C in the transverse direction is comprised between 10 and 27 Kg/cm$^2$, and/or ii) a ratio between the maximum shrink tension in the transverse direction and the residual cold shrink tension at 5°C in the transverse direction is comprised between 0.6 and 1.9.

In one embodiment of the film according to the invention, the maximum shrink tension in the transverse direction is comprised between 18 kg/cm$^2$ and 30 kg/cm$^2$ and, additionally, i) the residual shrink tension at 5°C in the transverse direction is comprised between 10 Kg/cm$^2$ and 27 Kg/cm$^2$.

In one embodiment of the film according to the invention, the maximum shrink tension in the transverse direction is not higher than 30 kg/cm$^2$ and, additionally, i) the residual shrink tension at 5°C in the transverse direction is comprised between 14 kg/cm$^2$ and 24 Kg/cm$^2$, and/or ii) ratio between the maximum shrink tension in the transverse direction and the residual cold shrink tension at 5°C in the transverse direction is comprised between 0.9 and 1.9.

In one embodiment of the film according to the invention, the maximum shrink tension in the transverse direction is not higher than 30 kg/cm$^2$ and, additionally, i) the residual shrink tension at 5°C in the transverse direction is comprised between 14 kg/cm$^2$ and 24 Kg/cm$^2$, or ii) the ratio between the maximum shrink tension in the transverse direction and the residual cold shrink tension at 5°C in the transverse direction is comprised between 0.9 and 1.9.

In one embodiment of the film according to the invention, the maximum shrink tension in the transverse direction is not higher than 32 kg/cm$^2$ and, additionally, i) the residual shrink tension at 5°C in the transverse direction is comprised between 10 kg/cm$^2$ and 27 Kg/cm$^2$, and/or ii) the ratio between the maximum shrink tension in the transverse direction and the residual cold shrink tension at 5°C in the transverse direction is comprised between 0.8 and 1.9.

In one embodiment of the film according to the invention, the maximum shrink tension in the transverse direction is not higher than 32 kg/cm$^2$ and, additionally, i) the residual shrink tension at 5°C in the transverse direction is comprised between 10 kg/cm$^2$ and 27 Kg/cm$^2$, and ii) the ratio between the maximum shrink tension in the transverse direction and the residual cold shrink tension at 5°C in the transverse direction is comprised between 0.8 and 1.9.

In one embodiment of the film according to the invention, i) the residual shrink tension at 5°C in the transverse direction is comprised between 10 kg/cm$^2$ and 27 Kg/cm$^2$, and ii) the ratio between the maximum shrink tension in the transverse direction and the residual cold shrink tension at 5°C in the transverse direction is comprised between 0.8 and 1.9 or, the maximum shrink tension in the transverse direction is comprised between 17 kg/cm$^2$ and 20 kg/cm$^2$.

In one embodiment of the film according to the invention, a maximum shrink tension in the transverse direction is comprised between 38 kg/cm$^2$ and 10 kg/cm$^2$, more preferably between 36 kg/cm$^2$ and 12 kg/cm$^2$, still more preferably between 34 kg/cm$^2$ and 14 kg/cm$^2$, once again more preferably between 30 kg/cm$^2$ and 18 kg/cm$^2$, and lastly more preferably between 25 kg/cm$^2$ and 20 kg/cm$^2$, and/or the ratio between the maximum shrink tension in the transverse direction and the residual cold shrink tension at 5°C in the transverse direction is between 0.7 and 1.4, between 0.8 and 1.3 and/or the residual cold shrink tension at 5°C in the transverse direction is between 14 and 25 kg/cm$^2$ or between 20 and 27 kg/cm$^2$.

In one embodiment of the film according to the invention, a total free shrink at 120°C is at least 30%, preferably at least 50% and still more preferably at least 60%.

In one embodiment of the film according to the invention, a total free shrink at 120°C is less than 45%, preferably less than 40%.

In one embodiment of the film according to the invention, a free shrink percentage at 120°C is at least 40%, preferably at least 50% in each of the transverse and longitudinal directions.

In one embodiment of the film according to a invention, a haze value is between 1% and 15%, preferably the haze not exceeding 8%, measured in accordance with standard ASTM D 1003, and a gloss value (60° angle) is between 100 gloss units and 140 gloss units, preferably between 105 and 130 gloss units measured in accordance with standard ASTM D 2457.

In one embodiment of the film according to the invention:

- the gas barrier layer (A) comprises at least 50 wt%, preferably at least 70 wt%, still more preferably at least 90 wt%, relative to the total weight of said layer, of one or more ethylene/vinyl alcohol copolymer (EVOH) resins;
- the outer layers (B) and (C) independently comprise at least 50 wt%, preferably at least 70 wt%, still more preferably at least 90 wt%, relative to the total weight of each of said layers, still more preferably, they essential consist of one or more polyolefins.

In one embodiment of the film according to the invention, the outer layers (B) and (C) have the same composition and comprise one or more polyolefins chosen from among ethylene homopolymers, ethylene copolymers, propylene homopolymers, propylene copolymers and mixtures thereof, preferably in a quantity of at least 50 wt%, preferably at least 70 wt%, still more preferably at least 90 wt%, relative to the total weight of each of said layers, still more preferably, they essentially consist of said polyolefins.

In one embodiment of the film according to the invention, the outer layers (B) and (C) have a different polyolefin composition in which the polyolefins for the second outer layer are chosen from among ethylene homopolymers, such as medium-density polyethylene MDPE and high-density polyethylene HDPE, ethylene-α-olefin copolymers having a density from about 0.895 to about 0.935 g/m$^3$, ethylene-vinyl acetate copolymers, ionomers, polypropylene homopolymers, propylene-ethylene copolymers, propylene-ethylene-butene copolymers, propylene-butene-ethylene polymers, acrylate copolymers and mixtures thereof.

In a second aspect, the present invention is directed to a process for the manufacturing of the films according to the first aspect of the present invention comprising the steps of:

a) coextruding the resins and/or blends of resins of the various layers through a round or flat extrusion die, thus obtaining a tube or sheet;
b) quenching the tube or sheet at temperature comprised between 5 and 25°C;
c) optionally cross-linking the tube or sheet, preferably by electron beam treatment at a radiation dosage in the range from 5 to 150 KGy;
d) heating the tube or sheet at an orientation temperature comprised between 100 °C and 125 °C;

e) simultaneously stretching the heated tube or sheet at a stretching ratio of at least 2.5:1 and of at most 5:1 in each of the transverse (TD) and longitudinal (LD) directions;
f) annealing the stretched tube or sheet by heating it at a temperature comprised between 50 and 95 °C;
g) cooling the annealed tube or sheet at a temperature lower than 35°C.

In this second aspect, the method may comprise the following steps:

- the rapid cooling b) is done at temperatures comprised between 10°C and 20°C, preferably at temperatures below 15°C;
- the orientation d) is done at temperatures comprised between 110 and 120°C;
- the stretching ratio e) is done at a stretching ratio of at least 3.5 and at most 4:1 in each of the transverse (TD) and longitudinal (LD) directions, preferably with a stretch ratio comprised between 3.5 and 3.9 in each of the transverse (TD) and longitudinal (LD) directions;
- the annealing is done by heating the film at a temperature comprised between 60 and 90°C and leading to a reduction in the width of the film of 5% to 25%, preferably from 6% to 20%.

In a third aspect, the present invention relates to a packaging method on a horizontal form-fill-seal machine HFFS which comprises:

(a) providing a film according to the present invention
(b) running the film through a former thus forming a tube
(c) inserting a product, optionally placed in a container, into the tube,
(d) sealing the tube longitudinally,
(e) sealing and cutting the tube transversally at the beginning and at the end of the package, optionally gas-flushing the tube before closing it, and
(f) heat shrinking the package.

In a fourth aspect, the present invention is directed to a tray lidding packaging method which comprises:

(I) providing a tray with heat-sealable rims,
(II) loading said tray with the product to be packaged
(III) applying a lid on top of said tray, and
(IV) heat-sealing said lid to the tray rims, optionally with a modified atmosphere between said lid and said tray, providing a package and
(V) heat shrinking the package simultaneously or subsequently to the sealing step in which a coextruded gas-barrier heat-shrinkable packaging film according to the present invention is used as the lid.

In a fifth aspect, the present invention is directed to a package bagged on horizontal form-fill-seal machines or to a tray lidded package comprising the packaging film of the first aspect.
In a sixth aspect, the present invention is directed to the use of the film according to the first aspect in a packaging process, preferably in a packaging process on a horizontal form-fill-seal machine HFFS or in a tray packaging process using lidding, where the film is optionally used in combination with an innermost gas-permeable packaging film.

BRIEF DESCRIPTION OF THE DRAWINGS

Figure 1 illustrates a possible rollers arrangement suitable for annealing the film according to the present invention
Figure 2 is a scheme representing the deformation of a tray and the relevant parameters taken into account in the present test method to evaluate the effect of the shrinkage of the film onto tray dimensions and shape.

DEFINITIONS

As used herein, the term "film" is inclusive of plastic web, regardless of whether it is a film or a sheet or a tubing.
As used herein the phrases "inner layer" and "internal layer" refer to any film layer having both of its principal surfaces directly adhered to another layer of the film.
As used herein, the phrase "outer layer" refers to any film layer having only one of its principal surfaces directly adhered to another layer of the film.

As used herein, the phrases "seal layer", "sealing layer", "heat seal layer", and "sealant layer", refer to the film outer layer which will be involved in the sealing of the film either to itself or to another film or sheet to close the package and that will thus be in contact with, or closer to, the packaged product.

As used herein, the phrase "adhesive layer" or "tie layer" refers to any inner film layer having the primary purpose of adhering two layers to one another.

As used herein, the phrases "longitudinal direction" and "machine direction", herein abbreviated "MD" or "LD", refer to a direction "along the length" of the film, i.e., in the direction of the film as the film is formed during coextrusion.

As used herein, the phrase "transverse direction" or "crosswise direction", herein abbreviated "TD", refers to a direction across the film, perpendicular to the machine or longitudinal direction.

As used herein, the term "coextrusion" refers to the process of extruding two or more materials through a single die with two or more orifices arranged so that the extrudates merge and weld together into a laminar structure before chilling, i.e., quenching. Coextrusion can be employed in film blowing, free film extrusion, and extrusion coating processes.

As used herein, the term "solid state orientation" refers to the process of stretching of the cast film carried out at a temperature higher than the Tg (glass transition temperatures) of all the resins making up the layers of the structure and lower than the temperature at which all the layers of the structure are in the molten state. The solid state orientation may be mono-axial, transversal or, preferably, longitudinal, or, preferably, bi-axial. As used herein, the phrases "orientation ratio" and "stretching ratio" refer to the multiplication product of the extent to which the plastic film material is expanded in the two directions perpendicular to one another, i.e. the machine direction and the transverse direction. Thus, if a film has been oriented to three times its original size in the longitudinal direction (3:1) and three times its original size in the transverse direction (3:1), then the overall film has an orientation ratio of 3x3 or 9:1.

As used herein the phrases "heat-shrinkable", "heat-shrink" and the like, refer to the tendency of the solid-state oriented film to shrink upon the application of heat, i.e., to contract upon being heated, such that the size of the film decreases while the film is in an unrestrained state. As used herein said term refer to solid-state oriented films with a free shrink in at least one of the machine and the transverse directions, as measured by standard ASTM D 2732, of at least 10 %, preferably at least 15% at 120 °C.

As used herein the phrases "total free shrink" means a value determined by adding the percent free shrink in the machine (longitudinal) direction to the percentage of free shrink in the transverse (crosswise) direction. As used herein, the term "maximum shrink tension" refers to the maximum value of tension developed by the films during the heating/shrinking process performed according to the test method described under the present experimental section.

As used herein, the term "residual cold shrink tension" refers to the shrink tension that the films show at the temperature of 5°C after that the complete heating-cooling cycle of the test method has been performed as described under the present experimental section.

As used herein the term "annealing" refers to a heat-treatment process aiming at the partial or complete removal of strains and stresses set up in the material during its forming and fabricating operations.

As used herein, the term "homo-polymer" is used with reference to a polymer resulting from the polymerization of a single monomer, i.e., a polymer consisting essentially of a single type of mer, i.e., repeating unit.

As used herein, the term "co-polymer" refers to polymers formed by the polymerization reaction of at least two different monomers. When used in generic terms the term "co-polymer" is also inclusive of, for example, ter-polymers. The term "co-polymer" is also inclusive of random co-polymers, block co-polymers, and graft co-polymers.

As used herein, the terms "(co)polymer" and "polymer" are inclusive of homo-polymers and co-polymers.

As used herein, the phrase "heterogeneous polymer" refers to polymerization reaction products of relatively wide variation in molecular weight and relatively wide variation in composition distribution, i.e., typical polymers prepared, for example, using conventional Ziegler-Natta catalysts.

As used herein, the phrase "homogeneous polymer" refers to polymerization reaction products of relatively narrow molecular weight distribution and relatively narrow composition distribution. This term includes those homogeneous polymers prepared using metallocene, or other single-site type catalysts.

As used herein, the term "polyolefin" refers to any polymerized olefin, which can be linear, branched, cyclic, aliphatic, aromatic, substituted, or unsubstituted, including "modified polyolefin". More specifically, included in the term polyolefin are homo-polymers of olefin, co-polymers of olefin, co-polymers of an olefin and a non-olefin co-monomer co-polymerizable with the olefin, such as vinyl monomers, modified polymers thereof, and the like. The term "modified polyolefin" is inclusive of modified polymer prepared by co-polymerizing the homo-polymer of the olefin or co-polymer thereof with an unsaturated carboxylic acid, e.g., maleic acid, fumaric acid or the like, or a derivative thereof such as the anhydride, ester or metal salt or the like. It is also inclusive of modified polymers obtained by incorporating into the olefin homo-polymer or co-polymer, by blending or preferably by grafting, an unsaturated carboxylic acid, e.g., maleic acid, fumaric acid or the like, or a derivative thereof such as the anhydride, ester or metal salt or the like. Specific examples include polyethylene homo-polymer, polypropylene homo-polymer, polybutene homo-polymer, ethylene-α-olefin co-polymer, propylene- α-olefin co-polymer, butene- α-olefin co-polymer, ethylene-unsaturated ester co-polymer, ethylene-unsaturated acid co-polymer, (e.g. ethylene-ethyl acrylate co-polymer, ethylene-butyl acrylate co-polymer, ethylene-methyl acrylate co-polymer, ethylene-acrylic acid co-polymer, and ethylene-methacrylic acid co-polymer), ethylene-vinyl acetate copolymer, ionomer resins, polymethylpentene, etc. and the corresponding modified polymers.

As used herein, "EVOH" refers to ethylene/vinyl alcohol copolymer. EVOH includes saponified or hydrolyzed ethylene/vinyl acetate copolymers with a degree of hydrolysis preferably at least 50%, and more preferably, at least 85%. Preferably, the EVOH comprises from about 28 to about 48 mole % ethylene, more preferably from about 32 to about 44 mole % ethylene.

As used herein the term "polyamide" refers to high molecular weight polymers having amide linkages along the molecular chain, and refers more specifically to synthetic polyamides such as nylons. Such term encompasses both homo-polyamides and co-(or ter-) polyamides. It also specifically includes aliphatic polyamides or co-polyamides, aromatic polyamides or co-polyamides, and partially aromatic polyamides or co-polyamides, modifications thereof and blends thereof. The homo-polyamides are derived from the polymerization of a single type of monomer comprising both the chemical functions which are typical of polyamides, i.e. amino and acid groups, such monomers being typically lactams or aminoacids, or from the polycondensation of two types of polyfunctional monomers, i.e. polyamines with polybasic acids. The co-, ter-, and multi-polyamides are derived from the copolymerization of precursor monomers of at least two (three or more) different polyamides. As an example in the preparation of the co-polyamides, two different lactams may be employed, or two types of polyamines and polyacids, or a lactam on one side and a polyamine and a polyacid on the other side.

As used herein, the term "EVA" refers to ethylene and vinyl acetate copolymers. The vinyl acetate monomer unit can be represented by the general formula: $[CH_3COOCH=CH_2]$.

As used herein, the term "adhered", as applied to film layers, broadly refers to the adhesion of a first layer to a second layer either with or without an adhesive, a tie layer or any other layer there between, and the word "between", as applied to a layer expressed as being between two other specified layers, includes both direct adherence of the subject layer to the two other layers it is between, as well as a lack of direct adherence to either or both of the two other layers the subject layer is between, i.e., one or more additional layers can be imposed between the subject layer and one or more of the layers the subject layer is between.

In contrast, as used herein, the phrase "directly adhered" is defined as adhesion of the subject layer to the object layer, without a tie layer, adhesive, or other layer there between.

As used herein the term "gas-barrier" when referred to a layer, to a resin contained in said layer, or to an overall film structure, refers to the property of the layer, resin or structure, to limit to a certain extent passage through itself of gases. When referred to a layer or to an overall structure, the term "gas-barrier" is used herein to identify layers or structures characterized by an Oxygen Transmission Rate (OTR evaluated at 23°C and 0 % R.H. according to standard ASTM D-3985) of less than 100 $cm^3$/ $m^2$.day.atm, even more preferably lower than 50 $cm^3$/ $m^2$.day.atm.

As used herein the terms "EVOH layer", "polyolefin layer", or "propylene copolymer layer" as well as the wording "layer of EVOH", "layer of polyolefin" or "layer of propylene copolymer" refer to layers comprising a major proportion, i.e., higher than 50 wt. %, preferably higher than 60 wt.%, higher than 70 wt.%, higher than 80 wt.%, higher than 90 wt.%, higher than 95 wt. %, up to about 100 wt.%, of one or more of the corresponding resins, i.e., one or more EVOH resins, one or more polyolefins, or one or more propylene copolymers respectively, calculated on the overall weight of the layer considered.

As used herein, the term "package" refers to the combination of all of the various components used in the packaging of a product, i.e., all components of the packaged product other than the product within the package. The package is inclusive of, for example, a rigid support member, all films used to surround the product and/or the rigid support member, an absorbent component such as a soaker pad, and even the atmosphere within the package, together with any additional components used in the packaging of the product.

As used herein, the phrase "container" or "support members" refers to a component of a package on which a product is directly placed, i.e., immediately under the product, which the product directly contacts. Food products are typically supported on a tray-like package component, which may be thermoformed into a tray or other shape, for supporting the product. With the term container, semi-rigid or rigid, foamed and non-foamed, trays or flat sheets are generally meant.

As used herein the terms "rigid" when referred to the support members or containers are intended to refer to either flat or tray-shaped supports that are capable of supporting themselves and have a specific shape, size and - if tray-shaped - volume. Support members can be flat and have any desired shape, e.g. squared, rectangular, circular, oval, etc., or preferably they are tray-shaped with a base or bottom portion that can have any desired shape as seen above and side-walls extending upwardly and possibly also outwardly from the periphery of said base portion, and ending with a flange surrounding the top opening. The support members for use in the packaging method of the present invention may be mono-layer or multi-layer structures, foamed, partially foamed or solid.

DETAILED DESCRIPTION OF THE INVENTION

In a first aspect, the present invention is directed to a coextruded gas-barrier heat-shrinkable packaging film comprising

- a core layer (A) comprising an ethylene/vinyl alcohol copolymer,
- two outer polyolefin layers (B) and (C), that may be equal or different,

said film being characterized by a maximum shrink tension in the transverse direction not higher than 40 kg/cm$^2$ and, additionally, by

i) a residual shrink tension at 5°C in the transverse direction comprised between 10 and 27 Kg/cm$^2$, or
ii) a ratio between the maximum shrink tension in the transverse direction and the residual shrink tension at 5°C in the transverse direction comprised between 0.6 and 1.9.

The films according to the present invention are characterized by a maximum shrink tension in the transverse direction lower than 40 Kg/cm$^2$.
Higher maximum shrink tension values, especially in transverse direction, generally result in tray or product distortion, especially when softer containers or products are used.
Preferably the film according to the invention, is directed to a coextruded gas-barrier heat-shrinkable packaging film comprising

- a core layer (A) comprising an ethylene/vinyl alcohol copolymer,
- two outer polyolefin layers (B) and (C), that may be equal or different,

said film being characterized by a maximum shrink tension in the transverse direction not higher than 40 kg/cm$^2$ and additionally by

i) a residual cold shrink tension at 5°C in the transverse direction comprised between 10 and 27 Kg/cm$^2$, and/or
ii) a ratio between the maximum shrink tension in the transverse direction and the residual cold shrink tension at 5°C in the transverse direction comprised between 0.6 and 1.9.

Preferably, said maximum shrink tension in the transverse direction is comprised between 17 kg/cm$^2$ and 40 kg/cm$^2$ and, additionally, i) said residual shrink tension at 5°C in the transverse direction is comprised between 10 kg/cm$^2$ and 27 Kg/cm$^2$.
Preferably, said maximum shrink tension in the transverse direction is not higher than 40 kg/cm$^2$ and, additionally, i) said residual shrink tension at 5°C in the transverse direction is comprised between 10 and 27 Kg/cm$^2$, and/or ii) said ratio between the maximum shrink tension in the transverse direction and the residual cold shrink tension at 5°C in the transverse direction is comprised between 0.8 and 1.9
More preferably, said maximum shrink tension in the transverse direction is not higher than 40 kg/cm$^2$ and, additionally, i) said residual shrink tension at 5°C in the transverse direction is comprised between 10 and 27 Kg/cm$^2$, and ii) said ratio between the maximum shrink tension in the transverse direction and the residual cold shrink tension at 5°C in the transverse direction is comprised between 0.8 and 1.9
Preferably, said maximum shrink tension in the transverse direction is comprised between 23 kg/cm$^2$ and 31 kg/cm$^2$ and additionally, i) said residual cold shrink tension at 5°C in the transverse direction is comprised between 10 and 27 Kg/cm$^2$, and/or ii) said ratio between the maximum shrink tension in the transverse direction and the residual cold shrink tension at 5°C
in the transverse direction is comprised between 0.6 and 1.9.
Preferably, said maximum shrink tension in the transverse direction is comprised between 18 kg/cm$^2$ and 30 kg/cm$^2$ and, additionally, i) said residual shrink tension at 5°C in the transverse direction is comprised between 10 Kg/cm$^2$ and 27 Kg/cm$^2$.
Preferably, said maximum shrink tension in the transverse direction is not higher than 30 kg/cm$^2$ and, additionally, i) said residual shrink tension at 5°C in the transverse direction is comprised between 14 kg/cm$^2$ and 24 Kg/cm$^2$, and/or ii) said ratio between the maximum shrink tension in the transverse direction and the residual cold shrink tension at 5°C in the transverse direction is comprised between 0.9 and 1.9.
More preferably, said the maximum shrink tension in the transverse direction is not higher than 30 kg/cm$^2$ and, additionally, i) said residual shrink tension at 5°C in the transverse direction is comprised between 14 kg/cm$^2$ and 24 Kg/cm$^2$, or ii) said ratio between the maximum shrink tension in the transverse direction and the residual cold shrink tension at 5°C in the transverse direction is comprised between 0.9 and 1.9.

Preferably, said maximum shrink tension in the transverse direction is not higher than 32 kg/cm$^2$ and, additionally, i) said residual shrink tension at 5°C in the transverse direction is comprised between 10 kg/cm$^2$ and 27 Kg/cm$^2$, and/or ii) said ratio between the maximum shrink tension in the transverse direction and the residual cold shrink tension at 5°C in the transverse direction is comprised between 0.8 and 1.9.

More preferably, said maximum shrink tension in the transverse direction is not higher than 32 kg/cm$^2$ and, additionally, i) said residual shrink tension at 5°C in the transverse direction is comprised between 10 kg/cm$^2$ and 27 Kg/cm$^2$, and ii) said ratio between the maximum shrink tension in the transverse direction and the residual cold shrink tension at 5°C in the transverse direction is comprised between 0.8 and 1.9.

More preferably, i) said residual shrink tension at 5°C in the transverse direction is comprised between 10 kg/cm$^2$ and 27 Kg/cm$^2$, and ii) said ratio between the maximum shrink tension in the transverse direction and the residual cold shrink tension at 5°C in the transverse direction is comprised between 0.8 and 1.9 or, said maximum shrink tension in the transverse direction is comprised between 17 kg/cm$^2$ and 20 kg/cm$^2$.

Preferably, said maximum shrink tension in the transverse direction is not higher than 38 kg/cm$^2$, more preferably not higher than 36 kg/cm$^2$ and even more preferably not higher than 34 kg/cm$^2$, even more preferably not higher than 32 kg/cm$^2$, still more preferably not higher than 30 kg/cm$^2$, most preferably not higher than 25 kg/cm$^2$.

Preferably, said maximum shrink tension in the transverse direction is not lower than 10 kg/cm$^2$, more preferably not lower than 12 kg/cm$^2$ and even more preferably not lower than 14 kg/cm$^2$, even more preferably not lower than 16 kg/cm$^2$, still more preferably not lower than 18 kg/cm$^2$, most preferably not lower than 20 kg/cm$^2$.

Preferably, said maximum shrink tension in the transverse direction is between 38 and 10 kg/cm$^2$, more preferably comprised between 36 and 12 kg/cm$^2$ and even more preferably comprised between 34 and 14 kg/cm$^2$, still more preferably comprised between 30 and 18 kg/cm$^2$, most preferably comprised between 25 and 20 kg/cm$^2$.

As previously stated, the present packages keeps an optimal appearance even after storage at low temperature if the packaging film is characterized by a peculiar balance between maximum and residual cold shrink tensions in TD, balance which may be represented by the ratio between said TD shrink tensions.

A too low residual cold shrink tension will result in a looseness of the shrunk film and the final package will not be tight enough (no drum effect). The "drum effect" refers to the sound that a package with a highly tensioned shrunk film wrapped around or sealed to a tray emits when hand beaten like the drums. This sound represents a simple but reliable indicator for the tightness of a package: only tensioned films emit a drum-like sound otherwise no sound or only a muffled tone is produced when the film is beaten. A too high residual cold shrink tension will be responsible for package distortion.

Preferably in the films of the present invention the ratio between the maximum shrink tension in the transverse direction and the residual cold shrink tension (at 5°C) in the transverse direction is between 0.7 and 1.4 more preferably between 0.8 and 1.3.

In an embodiment, said ratio is comprised between 0.6 and 1.4 and said maximum shrink tension in the transverse direction is comprised between 14 and 36 kg/cm$^2$.

In another embodiment, said ratio is comprised between 0.6 and 0.9 and said maximum shrink tension in the transverse direction is comprised between 14 and 25 kg/cm$^2$.

In a further embodiment, said ratio is comprised between 1.0 and 1.4 and said maximum shrink tension in the transverse direction is comprised between 14 and 36 kg/cm$^2$.

In another embodiment, said ratio is comprised between 1.0 and 1.4 and said maximum shrink tension in the transverse direction is comprised between 25 and 36 kg/cm$^2$.

In a further embodiment, said ratio is comprised between 0.9 and 1.1 and said maximum shrink tension in the transverse direction is comprised between 20 and 40 kg/cm$^2$.

In a preferred embodiment, said ratio is comprised between 0.9 and 1.1 and said maximum shrink tension in the transverse direction is comprised between 26 and 37 kg/cm$^2$.

The films according to the present invention are also characterized by a residual cold shrink tension (at 5°C) in the transverse direction between 10 and 27 Kg/cm$^2$ or between 14 and 24 kg/cm$^2$ or between 20 and 27 kg/cm$^2$.

The films according to the present invention typically show a high free shrink, usually higher than 15 %, preferably higher than 20 % in each one of TD and LD direction, at temperatures in the range between 100 and 150 °C (i.e., the temperatures typically reached by the environment in the so-called flowpack and in the tray-lidding processes).

Preferably, the films according to the present invention show a total free shrink at 120°C of at least about 15%, 30%, 50%, 60%, 70% or 80%. Films intended to be used as wrapping material for so-called flowpack applications generally have total free shrink at 120°C higher than 30%, preferably higher than 50%, even more preferably higher than 60%.

In a preferred embodiment, films according to the present invention especially suitable for fso-called lowpack applications show a free shrink at 120°C of at least 30%, 40%, 50%, 60% in each one of TD and LD direction. In case the present film is used to manufacture the shrinkable lids for tray lidding applications, a total free shrink at 120°C lower than 45% is preferred, lower than 40% is more preferred. Preferably for tray lidding applications, the total free shrink at 120°C is higher than 15%, more preferably higher than 20%.

The films according to the present invention show very good optical properties, particularly an haze value between 1% and 15 % measured according to standard ASTM D 1003, preferably an haze not higher than 10%, more preferably a haze not higher than 8% and a gloss value (60° angle) between 100 g.u. e 140 g.u. measured according to standard ASTM D 2457, preferably between 105-130 g.u.

The films of the present invention comprises an EVOH core gas-barrier layer (A), a first outer polyolefin layer (B) a second outer polyolefin layer (C) that may be equal or different.

For the gas-barrier layer (A), a single EVOH or a blend of two or more EVOH resins can be used as well as

a blend of one or more EVOH resins with one or more polyamides.

In a preferred embodiment, the gas barrier layer comprises a blend of one or more EVOH resins with one or more polyamides.

In this case, suitable polyamides are those commonly indicated as nylon 6, nylon 9, nylon 10, nylon 11, nylon 66, nylon 6/66, nylon 6,9 nylon 12, nylon 6,12, nylon 6,10, partially aromatic polyamides such as MXD6 and MXD6/MDI and the like, wherein a preferred polyamide is nylon 6/12, a copolymer of caprolactam with laurolactam with a low melting temperature, such as Grilon™ CF 6S or Grilon™ CA6E manufactured and marked by the company EMS. Generally, if a high oxygen barrier is needed, the amount of polyamide, if any, blended with EVOH will not be higher than 20% by weight of the overall weight of the blend, preferably not higher than 15 %, and even more preferably not higher than 10 %. Preferably the polyamide content in such a barrier layer blend is about 5%.

In a more preferred embodiment, nylon 6/12 is blended with EVOH.

In a most preferred embodiment, 5% of nylon 6/12 is blended with 95% of an EVOH resin comprising from about 28 to about 48 mole % ethylene, more preferably from about 32 to about 44 mole % ethylene, most preferably 44 mole % ethylene.

The gas barrier layer (A) of the present film comprises at least 50% by weight with respect to the total weight of said layer, preferably at least 70%, more preferably at least 90%, of one or more EVOH resins.

In one embodiment gas barrier layer (A) of the present film consists of one or more EVOH resins.

The thickness of the barrier layer can vary, depending in part on the overall thickness of the film and on its use, between 1 and 6 μm. A preferred thickness is between 1.5 and 5 μm, and more preferably it is comprised between 2.0 and 4 μm.

The film of the present invention comprises a first outer polyolefin layer (B) and a second outer polyolefin layer (C). Alternatively, these outer layers may be indicated as an outer heat-sealable layer (B) and an outer abuse-resistant layer (C). This is done just to distinguish between the two outer surfaces of the end structure, even if not necessarily the two layers have a different composition and even if they might both be involved in a seal (e.g., if in the so-called flowpack process the longitudinal seal is a lap seal where the polyolefin outer layer (B) is sealed to the polyolefin outer layer (C)), simply because in most of the applications only one of the film outer polyolefin layers will be involved in a seal while the other outer layer will be the outer surface of the end package and - as such - more subject to "abuse".

Each of these outer layers (B) and (C) may comprise one or more polyolefins.

Preferably B and C layers independently comprises at least 50% by weight with respect to the total weight of each of said layers, preferably at least 70%, more preferably at least 90%, even more preferably they essentially consist of one or more polyolefins.

Preferred polyolefins for the heat-sealable layer (B) and/or layer (C) will be ethylene homopolymers, ethylene co-polymers, propylene homopolymers, propylene co-polymers and blends thereof, more preferably ethylene homopolymers, ethylene co-polymers and blends thereof.

Ethylene homo- and co-polymers particularly suitable for the heat-sealable layer (B) are selected from the group consisting of ethylene homo-polymers (polyethylene), heterogeneous or homogeneous ethylene-α-olefin copolymers, preferably ethylene - $(C_4$-$C_{10})$-olefin copolymers, ethylene-cyclic olefin copolymers, such as ethylene-norbornene copolymers, ethylene-vinyl acetate co-polymers, ethylene-$(C_1$-$C_4)$ alkyl acrylate or methacrylate co-polymers, such as ethylene-ethyl acrylate co- polymers, ethylene-butyl acrylate co-polymers, ethylene-methyl acrylate co-polymers, and ethylene-methyl methacrylate co-polymers, ethylene-acrylic acid co-polymers, ethylene-methacrylic acid co-polymers, ionomers, and blends thereof in any proportion.

Preferred resins are heterogeneous materials as linear low density polyethylene (LLDPE) with a density usually in the range of from about 0.910 g/cm$^3$ to about 0.930 g/cm$^3$, linear medium density polyethylene (LMDPE) with a density usually in the range of from about 0.930 g/ cm$^3$ to about 0.945 g/ cm$^3$, and very low and ultra low density polyethylene (VLDPE and ULDPE) with a density lower than about 0.910 g/ cm$^3$; and homogeneous polymers such as metallocene-catalyzed EXACT™ and EXCEED™ homogeneous resins obtainable from Exxon, single-site AFFINITY™ resins obtainable from Dow, and TAFMER TM homogeneous ethylene- alpha -olefin copolymer resins obtainable from Mitsui. All these materials generally include co-polymers of ethylene with one or more comonomers selected from (C4-C10)- alpha -olefin such as butene-1, hexene-1, octene-1, etc., in which the molecules of the copolymers comprise long chains with relatively few side chain branches or cross-linked structures.

Particularly preferred resins for the heat-sealable layer (B) are Dowlex 2045 S by Dow Chemical, Eltex PF6220AA by Ineos, Affinity PL 1880G, Affinity PL1845G, Affinity PL1850G by Dow and Exceed 2018CA, Exceed 2018HA, Exact 0210 by Exxon Mobil.

Propylene polymers suitable for said heat-sealable outer layer (B) are selected from the group consisting of propylene homo-polymer and propylene co- and ter-polymers with ethylene and/or a $(C_4-C_{10})$-$\alpha$-olefin, and more preferably from the group consisting of polypropylene, propylene-ethylene co-polymers, propylene-ethylene-butene co-polymers, propylene-butene-ethylene copolymers and blends thereof in any proportion.

Particularly preferred polypropylene-based resins for the heat-sealable layer are Eltex PKS399, PKS359 and PKS607 by Ineos Polyolefins, Adsyl 5C37F by Basell and Borsoft SD233CF by Borealis.

Said outer heat-sealable polyolefin layer (B) may also comprise a blend of a major proportion of one or more polymers of the group of ethylene homo- and copolymers and propylene homo- and co-polymers, with a minor proportion of one or more other polyolefins and/or modified polyolefins, such as polybutene homo-polymers, butene-$(C_5-C_{10})$-$\alpha$-olefin copolymers, anhydride grafted ethylene-$\alpha$-olefin copolymers, anhydride grafted ethylene-vinyl acetate copolymers, rubber modified ethylene-vinyl acetate copolymers, ethylene/propylene/diene (EPDM) copolymers, and the like.

The composition of said outer heat-sealable polyolefin layer (B) will mainly depend on the final application foreseen for the end structure. For instance when the film according to the present invention is used for so-called flowpack applications where it will be sealed to itself, typically the composition of the outer layer (B) will be based on ethylene polymers as these resins typically have a lower seal initiation temperature and can be sealed more easily to themselves. On the other hand if the film is used in tray lidding applications and the container to which it has to be sealed is of polypropylene, the outer heat-sealable layer (B) will preferably be of a propylene polymer.

Preferably, the heat-sealant layer (B) comprises one or more antifog additives.

The term "antifog film" means a plastic film having at least one surface whose properties have been modified or adapted to have antifog characteristics - that is, a tendency to reduce or minimize the negative effects of moisture condensation. The antifog film may incorporate or have dispersed in effective amounts one or more antifog agents in the plastic film resin before forming the resin into a film. Antifog agents are known in the art, and fall into classes such as esters of aliphatic alcohols, polyethers, polyhydric alcohols, esters of polyhydric aliphatic alcohols, polyethoxylated aromatic alcohols, nonionic ethoxylates, and hydrophilic fatty acid esters. Usually, the antifog agent is previously compounded in a carrier resin obtaining a masterbatch, subsequently added to the layer (B) and/or C during the extrusion of the films according to the present invention.

Preferably, an antifog agent based on fatty acid esters is used. Commercially available antifog agents suitable for the films according to the first object of the present invention are for instance Cesa Nofog PEA 0050597 by Clariant, Polybatch AF1026SC by Schulman and 103697AF by Ampacet.

Typically, the antifog agent is incorporated into the layer (B) in an amount from 0.5 to 10% by weight based on the total weight of the layer, preferably from 1 to 5%, even more preferably from 1 to 4% by weight.

The second outer layer (C) may have the same composition of the outer heat-sealable layer (B), or it may have a different polyolefin composition.

In this latter case preferred polyolefins for the second outer layer (C) are ethylene homopolymers, such as medium-density polyethylene MDPE and high-density polyethylene HDPE, ethylene-$\alpha$-olefin copolymers, particularly those with a density of from about 0.895 to about 0.935 g/cm$^3$, and more preferably of from about 0.900 to about 0.930 g/cm$^3$, ethylene-vinyl acetate copolymers, particularly those with a vinyl acetate content of from about 4 to about 14% by weight, ionomers, polypropylene homopolymers, propylene-ethylene co-polymers, propylene-ethylene-butene copolymers, propylene-butene-ethylene copolymers, acrylates copolymers such as EBA, EAA or EMA, and their blends.

In the preferred embodiment, the second outer layer (C) has the same composition of the outer heat-sealable layer (B).

In a most preferred embodiment, the second outer layer (C) comprises an antifog agent which may be the same of different than the one incorporated into layer (B).

In a preferred embodiment, both the second outer layer (C) and the outer heat-sealable layer (B) comprise a linear low density polyethylene, preferably in major amount.

The thickness of the outer heat-sealable layer (B) can be up to about 40 % of the overall thickness of the structure, preferably up to about 35 % and more preferably up to about 30 %. Preferably its thickness is higher than about 8 %, and more preferably higher than about 10 % of the overall thickness of the film or sheet, e.g., typically comprised between about 15 and about 30 %.

The thickness of the outer abuse resistant polyolefin layer (C) may be in the same range as indicated for the heat-sealable outer layer (B). In a preferred embodiment, particularly when the sequence of layers in the film of the invention is symmetrical, the thickness of the two outer layers is the same.

The film according to the first aspect of the present invention can further comprise one or more additional inner layer (D).

For example, the film of the present invention may comprise one single layer (D) or two layers (D) positioned on either sides of the core EVOH layer (A), i.e., one between core layer (A) and heat-sealable layer (B) and the other between core layer (A) and the abuse resistant layer (C).

The thickness of the single layer (D) or the total thickness of the two layers (D), should there be two of such layers, will typically be comprised between about 8 and about 40 % of the overall thickness of the film, preferably up to about 35 %, e.g., up to about 30 %. Typically it will be comprised between about 10 and about 30 % of the overall thickness of the film and more preferably between about 15 and about 25 %.

Such a layer may include one or more polymers that include mer units derived from at least one of a $C_2$-$C_{12}$-$\alpha$-olefin, styrene, amides, esters, and urethanes. Preferred among these are those homo- and heteropolymers that include mer units derived from ethylene, propylene, and 1-butene, even more preferably an ethylene heteropolymer such as, for example, ethylene/$C_3$-$C_8$ a -olefin heteropolymer, ethylene/ethylenically unsaturated ester heteropolymer (e.g., ethylene/butyl acrylate copolymer), ethylene/ethylenically unsaturated acid heteropolymer (e.g., ethylene/(meth)acrylic acid copolymer), and ethylene/vinyl acetate heteropolymer. Preferred ethylene/vinyl acetate heteropolymers are those that include from about 2.5 to about 27.5 weight %, preferably from about 5 to about 20%, even more preferably from about 5 to about 17.5% mer units derived from vinyl acetate. Such a polymer preferably has a melt index of from about 0.3 to about 25, more preferably from about 0.5 to about 15, still more preferably from about 0.7 to about 5, and most preferably from about 1 to about 3.

Such layer (D) can alternatively comprise a copolymer of propylene with butene and optionally also with ethylene, indicated in the following as the "propylene copolymer".

In the propylene copolymer of layer (D), propylene can be the comonomer present in the major proportion. It is preferably present in an amount by weight of at least 60 %, at least 65 %, at least 70 %, at least 75 %, or at least 80 %.

The total amount of comonomers (butene or butene plus ethylene) will be preferably comprised between about 4 % by weight and about 20 %, 22 %, 24 %, 26 %, 28 %, 30 %, 32 %, 34 %, 36 %, 38 %, or 40 %. Preferred total amounts by weight of the comonomers will be at least 5 %, at least 8 %, at least 10 %, at least 12 %, at least 14%, at least 16 % or at least 18 %.Suitable copolymers of propylene with butene will comprise from about 4 to about 20 % by weight of butene, typically from about 4 to about 14 % by weight of butene-1. Examples of propylene copolymers with butene and ethylene will contain for instance from 0.5 to 5 % by weight of ethylene and from 2.5 to 10 % by weight of butene, or from 2 to 5 % by weight of ethylene and from 6 to 12 % by weight of butene, or from 2 to 10 % by weight of ethylene and from 2 to 10 % by weight of butene. The propylene copolymers of layer (D) can be obtained by using either titanium-based catalyst systems (Ziegler-Natta systems) or metallocene-based catalyst systems, wherein these latter are however preferred. Preferably the molecular weight distribution, Mw/Mn, in the propylene copolymers of layer (D) will be lower than 4, and more preferably lower than 3.5.

In one embodiment, layer (D) consists of one or more propylene copolymers as indicated above. In another embodiment the propylene copolymer amounts to at least about 60 %, preferably at least 70 %, more preferably at between 80 and 90 %, still more preferably at about 85% by weight of layer (D) while the complement to 100 % is an ethylene copolymer. Preferably in such a case the ethylene copolymer is an ethylene-$\alpha$-olefin copolymer with a density below 0.915 g/cm$^3$, typically a single-site ethylene- $\alpha$ -olefin copolymer with a density comprised between 0.895 and 0.910 g/cm$^3$. In another alternative preferred embodiment the propylene copolymer of layer (D) will be blended with a modified polyolefin, to provide for an improved bond of said layer (D) to the adjacent layers in the structure, and in particular to improve the bond with the core layer (A), should said two layers be directly adhered one to the other.

The films of the present invention preferably comprise one or more tie or adhesive layers E.

Tie layers have the primary purpose of improving the adherence of two layers to each other. Tie layers may include polymers having grafted polar groups so that the polymer is capable of covalently bonding to polar polymers such as EVOH. Useful polymers for tie layers include ethylene/unsaturated acid copolymer, ethylene/unsaturated ester copolymer, anhydride-modified polyolefin, polyurethane, and mixtures thereof. Preferred polymers for tie layers include one or more of ethylene/vinyl acetate copolymer having a vinyl acetate content of at least 15 weight %, ethylene/methylacrylate copolymer having a methyl acrylate content of at least 20 weight %, anhydride modified ethylene/methyl acrylate copolymer having a methyl acrylate content of at least 20%, and anhydride-modified ethylene/alpha-olefin copolymer, such as an anhydride grafted LLDPE. Modified polymers or anhydride-modified polymers include polymers prepared by copolymerizing an unsaturated carboxylic acid (e.g., maleic acid, fumaric acid), or a derivative such as the anhydride, ester, or metal salt of the unsaturated carboxylic acid with -- or otherwise incorporating the same into an olefin homopolymer or copolymer. Thus, anhydride-modified polymers have an anhydride functionality achieved by grafting or copolymerization.

These adhesive layers may have the same or a different composition and will comprise one or more modified polyolefins as indicated above possibly blended with one or more polyolefins. Also the thickness of the adhesive layers may vary depending on the overall film thickness and on the type of resin employed. In general, however suitable adhesive layers typically have a thickness of from 1 to 4 $\mu$m, e.g., 2-3 $\mu$m. Additional adhesive layers may be present depending on the specific structure of the film.

Particularly preferred commercially available tie resins for the films of the present invention are ADMER AT2146E, Admer NF518E, Admer NF911 E by Mitsui, Bynel 4104, Bynel 3861 by Dupont and Plexar PX3227 by Equistar.

Other layers may be present in the overall structure, such as easy-opening layers or seal assisting layers (F) directly adhering to the heat-sealable layer (B) should this be necessary to provide the film with the desired easy-opening properties.

The overall thickness of the film can vary depending on the end use thereof typically from about 7 to about 40 $\mu$m, and preferably from about 10 to about 35 $\mu$m, generally around 15,20,22,24,26,28,30 $\mu$m.

In the most preferred embodiment, the film according to the present invention has a total thickness of from about 20 to 25 $\mu$m.

The gas-barrier film according to the present invention can comprise from 2 to 20 layers, preferably from 3 to 12 layers and more preferably, from 4 to 9 layers.

In the most preferred embodiments, the film according to the present invention is a 5 or 7 layers structure. Non-limiting examples of possible layer sequences of the film of the present invention are the following: B/A/C, B/A/E/C, B/E/A/C, B/E/A/E/C, B/D/A/C, B/D/A/D/C, B/D/E/A/C, B/D/E/A/D/C, B/D/E/A/E/D/C, B/F/A/C, B/F/A/E/C, B/F/E/A/C, B/F/E/A/E/C, B/F/D/A/C, B/F/D/A/D/C, B/F/D/E/A/C, B/F/D/E/A/D/C, B/F/D/E/A/E/D/C, B/E/D/A/C, B/E/D/A/D/C, B/E/D/E/A/C, B/E/D/E/A/D/C, B/E/D/E/A/E/D/C, B/E/A/E/D/E/C, B/E/A/E/D/C, B/E/A/E/D/E/C, B/E/D/A/E/C, B/E/D/E/A/E/C, B/E/D/E/A/E/D/E/C, B/E/D/E/A/D/E/C, B/E/D/E/A/E/D/C, B/E/D/E/A/E/D/E/C wherein, in case of repetition of the same letter in one sequence, the compositions of the relative layers can be the same or different.

In the most preferred embodiment the film of the present invention has the sequence B/E/A/E/C.

In the preferred embodiment the film of the present invention has the sequence B/E/A/E/C where the same tie resin is used for both layers (E) and layers (B) and (C) have the same resin compositions.

In an embodiment, the film of the present invention has the sequence B/E/A/E/C where the same adhesive resin is used for both layers (E), and layers (B) and (C) have the same resin compositions but only layer (B) comprises an antifog additive.

In a further embodiment, the film of the present invention has the sequence B/E/A/E/C where the same tie resin is used for both layers (E), and layers (B) and (C) have the same resin compositions and both comprise the same or different antifog additive.

In a preferred embodiment, the film of the present invention has the sequence B/E/A/E/C where the same tie resin is used for both layers (E), layers (B) and (C) have the same resin compositions and comprise the same or different antifog additive, the total thickness of the film is comprised between 20 and 25 $\mu$m and/or the barrier layer comprises a blend of a polyamide and EVOH.

In a more preferred embodiment, the film of the present invention has the sequence B/E/A/E/C where the same tie resin is used for both layers (E), layers (B) and (C) have the same resin compositions and comprise the same or different antifog additive, the total thickness of the film is between 20 and 25 $\mu$m and the barrier layer comprises a blend of nylon 6/12 and EVOH.

In a more preferred embodiment, the film of the present invention has the sequence B/E/A/E/C where the same tie resin is used for both layers E, layers (B) and (C) have the same resin compositions and comprise the same or different antifog additive, the total thickness of the film is comprised between 20 and 25 $\mu$m and the barrier layer comprises a blend of nylon 6/12 and of an EVOH resin comprising from about 28 to about 48 mole % ethylene, more preferably from about 32 to about 44 mole % ethylene, most preferably 44 mole % ethylene.

In still another preferred embodiment, the film of the present invention has sequence B/E/A/E/C, where the same bonding resin is used for both layers (E), the layers (B) and (C) have the same resin compositions and comprise the same antifog additive or different antifog additives, the total thickness of the film is comprised between 20 and 25 $\mu$m, the barrier layer comprises a mixture of Nylon 6/12 and an EVOH resin comprising from about 28 to about 48 mole % of ethylene, more preferably from about 32 to about 44 mole % of ethylene, most preferably 44 mole % of ethylene and the thickness of the barrier layer is comprised between 1 and 6 $\mu$m, preferably 1.5 and 5 $\mu$m, and more preferably between 2.0 and 4 $\mu$m.

In a still preferred embodiment, the film of the present invention has the sequence B/E/A/E/C where the same tie resin is used for both layers (E), layers (B) and (C) have the same resin compositions and comprise the same or different antifog additive, the total thickness of the film is comprised between 20 and 25 $\mu$m, the barrier layer consists of a blend of 5% nylon 6/12 and 95% of an EVOH resin comprising from about 28 to about 48 mole % ethylene, more preferably from about 32 to about 44 mole % ethylene, most preferably 44 mole % ethylene and the thickness of the barrier layer is comprised between 1 and 6 $\mu$m, preferably between 1.5 and 5 $\mu$m, and more preferably between 2.0 and 4 $\mu$m.

In a still preferred embodiment, the film of the present invention has the sequence B/E/A/E/C where the same tie resin is used for both layers E, layers (B) and (C) have the same resin compositions and comprise the same or different antifog additive, the total thickness of the film is comprised between 20 and 25 $\mu$m, the barrier layer consist of a blend of 5% nylon 6/12 and 95% EVOH resin comprising from about 28 to about 48 mole % ethylene, more preferably from about 32 to about 44 mole % ethylene, most preferably 44 mole % ethylene, the thickness of the barrier layer is comprised between 1 and 6 $\mu$m, preferably between 1.5 and 5 $\mu$m, and more preferably between 2.0 and 4 $\mu$m.

In the most preferred embodiment, the film of the present invention has the sequence B/E/A/E/C where the same tie resin is used for both layers (E), layers (B) and (C) comprise a major proportion of LLDPE and comprise the same or different antifog additive, the total thickness of the film is comprised between 20 and 25 $\mu$m, the barrier layer consist of a blend of 5% nylon 6/12 and 95% EVOH resin comprising from about 28 to about 48 mole % ethylene, more preferably from about 32 to about 44 mole % ethylene, most preferably 44 mole % ethylene, the thickness of the barrier layer is comprised between 1 and 6 $\mu$m, preferably between 1.5 and 5 $\mu$m, and more preferably between 2.0 and 4 $\mu$m.

One or more of the layers of the film of the present invention may contain any of the additives conventionally employed in the manufacture of polymeric films. Thus, agents such as pigments, lubricants, anti-oxidants, radical scavengers, oxygen scavengers, UV absorbers, odour absorbers, antimicrobial agents, thermal stabilisers, anti-blocking agents, surface active agents, slip aids, optical brighteners, gloss improvers, viscosity modifiers may be incorporated as appropriate. In particular, to improve the processing of the film in high speed packaging equipment slip and/or anti-blocking agents may be added to one or both of the outer layers. The additives may be added in the form of a concentrate, preferably in a polyethylene carrier resin. More preferably the same masterbatch incorporates both the antiblock and the antifog agents. As an alternative, slip agents may be added by coating, for instance by plasma coating or by spraying. The amount of additive is typically in the order of 0.2 to 5% by weight of the total weight of the layer.

The films of the present invention are preferably cross-linked, as hereinafter described.

Finally, the films of the present invention can be printed by using techniques well known in the art.

In a second aspect, the present invention is directed to a process for the manufacturing of the films according to the first aspect of the present invention comprising the steps of:

a) coextruding the resins and/or blends of resins of the various layers through a round or flat extrusion die, thus obtaining a tube or sheet;
b) quenching the tube or sheet at temperature comprised between 5 and 25°C;
c) optionally cross-linking the tube or the sheet, preferably by electron beam treatment at a radiation dosage in the range from 5 to 150 KGy;
d) heating the tube or the sheet to an orientation temperature comprised between 100 °C and 125 °C;
e) simultaneously stretching the heated tube or sheet at a stretching ratio of at least 2.5:1 in each TD and LD direction and of at most 5:1 in each TD and LD direction;
f) annealing by heating the stretched tube or sheet to a temperature comprised between 50 and 95 °C;
g) cooling the annealed tube or sheet at a temperature lower than 35°C.

The films according to the present invention can be obtained by coextrusion of the resins and/or blends of resins of the various layers through a round or flat extrusion die (step a), quickly followed by quenching (step b).

Preferably a round die is used and the distance between the die exit and the forming shoe has to be kept between 5 and 15 cm, preferably between 8 and 10 cm. At the forming shoe, the tube is quenched by water and/or air treatment, at temperature comprised between 5 and 25°C, preferably between 10°C and 20°C, even more preferably at temperatures lower than 15°C.

The thick tube or sheet is then preferably cross-linked (step c) to improve the strength of the film, improve the orientability of the film, and help to avoid burning through during heat seal operations. Cross-linking may be achieved by using chemical additives or, preferably, by subjecting the film layers to one or more energetic radiation treatments such as ultraviolet, X-ray, gamma ray, beta ray, and high energy electron beam treatment to induce cross-linking between molecules of the irradiated material. The film may be exposed to radiation dosages of at least 5, preferably at least 7, more preferably at least 10, most preferably at least 15 kGy (kiloGrays). The radiation dosage may also range from 5 to 150, preferably from 10 to 100, more preferably from 15 to 75 kGy and even more preferably 20 to 65 KGy.

Afterwards, the thick tube or sheet has to be heated to the orientation temperature (step d), comprised between about 100 °C and about 125 °C, preferably between 110° and 120°C, by passing it through a hot air tunnel, where the tube is additionally heated by contact with internally heated hot rolls, or an IR oven and then stretched mono- or bi-axially (step e). When a round extrusion die is employed, stretching is generally carried out by the trapped bubble technique. In this technique the inner pressure of a gas such as air is used to expand the diameter of the thick tubing obtained from the extrusion to give a larger bubble transversely stretched, and the differential speed of the nip rolls that hold the bubble is used to get the longitudinal stretching. The stretching ratio is of at least 2.5:1 in each one of TD and LD direction, preferably of at least 3.5. Preferably, the stretching ratio is of at most 5:1 in each one of TD and LD direction, preferably at most 4:1 in each one of TD and LD direction. More preferably, the stretching ratio is comprised between 3.5 and 3.9 in each one of TD and LD direction.

Preferably, the same stretching ratio is applied in the machine and transverse direction.

In some cases, it could be advantageous to apply different stretching ratio, in order to obtain quite unbalanced shrink properties in the two directions of the films.

Alternatively, when a flat die is used in the extrusion step, orientation is carried out by means of a simultaneous tenter frame.

The film so obtained can then be subjected to a heat treatment under strictly controlled conditions (annealing) (step f). In particular such heat treatment involves heating the film to a temperature comprised between 50 and 95°C, preferably comprised between 60 and 90°C and then cooling it down to room temperature or below.

The heat treatment according to the present invention might be carried out off-line, but preferably it is performed right on the line of all other processing operations

Any annealing technique known in the art may be employed suitably choosing the temperature in the above range and setting the annealing time, generally ranging form 1 to 5 sec, also taking into account the speed of the line, to meet the above objective.

Preferably the annealing step is performed by allowing a reduction in the film width from 5% to 25%, preferably from 6% to 20%, but manufacturing processes in which the annealing step does not change film's width - by suitably clamping the film - are also included in the present invention.

In particular such a heat treatment may be part of the overall process or be a step added thereto.

In the former case the annealing may be obtained, for instance, by using the "triple bubble" technology. In the triple bubble technology first a bubble is extruded downward into a water quench, then the tube is reheated and inflated in an orienting station ("second bubble") and finally it goes to an annealing station ("third bubble").

In the latter case, before being wound up, the film obtained from the solid state orientation step, either as a flattened tubular film or as a mono-ply film, is conveyed to a conventional annealing station or heated to the suitably selected temperature.

As the thermal capacity of the films according to the present invention is such that they rapidly attain the temperature of the environment, for the purpose of the present invention, the heat treatment temperature is defined as the temperature of the heated elements with which the film is contacted or the ambient temperature to which the film is exposed during the treatment. In practice the film may be heated to the suitably selected annealing temperature by conventional techniques, such as, by exposure of the film to radiant elements, by passage of the film through a heated air oven or an IR oven, or by contact of the film with the surface of one or more heated plates or rollers.

According to a preferred embodiment in this case, the heat treatment may be carried out by first running the film over and in contact with the surface of a number, e.g., 2 to 8, preferably 4 or 6, of revolving rollers heated at the suitably selected temperature, and then over and in contact with the surface of few other, e.g., 2 to 4, rollers cooled to a temperature below room temperature.

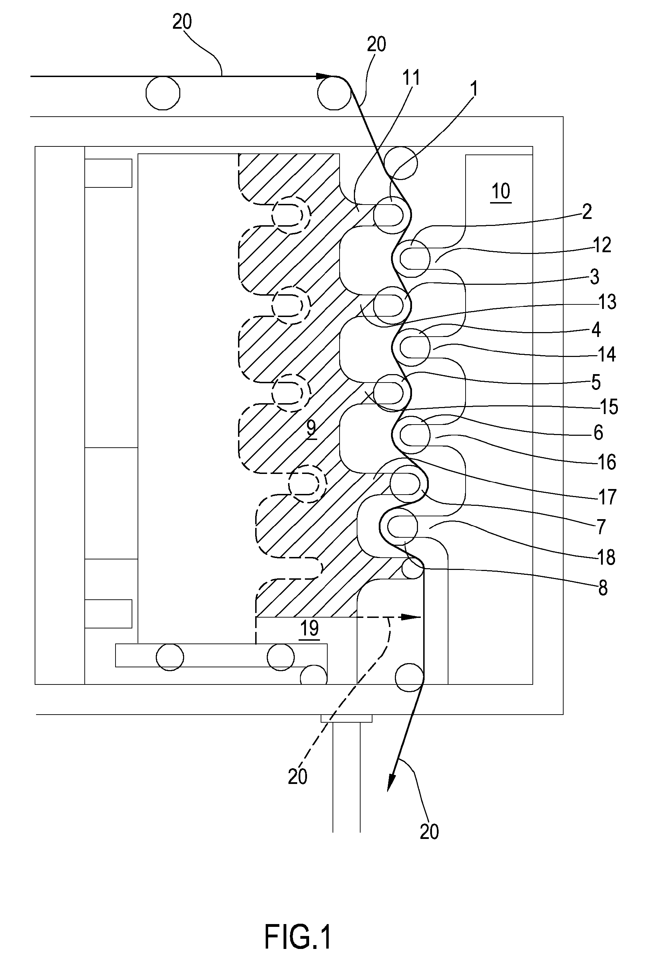

The rollers are typically disposed - as illustrated in Figure 1- on two vertical rows, whereas rollers (1), (3), (5), and (7) are mounted on a support member (9) by means of supporting bars (11), (13), (15) and (17) and rollers (2), (4), (6), and (8) are mounted on a similar support member (10) by means of supporting bars (12), (14), (16) and (18). While support (10) is fixed, support member (9), and rollers (1), (3), (5), and (7) jointly thereto, can be moved along the axis (19) to approach support member (9). On each support member the distance between two subsequent rollers is larger than the rollers' diameter and the rollers mounted on one support member are shifted with respect to those mounted on the other support member so that by reducing the distance between the two support members the row of rollers (1), (3), (5), and (7) can come closer, align, or even go beyond that of rollers (2), (4), (6), and (8).

The film (20) is driven through this unit at a speed which generally corresponds to the speed of the production line. The contact time of the film with the heating and cooling rollers, and therefore the length of the heating time and that of the cooling time will depend on the rollers diameters, on the speed of the line, and on the distance between the two rows of rollers. As a matter of fact, for a given line speed and roller diameter, the closer the two rows the longer is the contact time. The dimensions of the rollers can be widely varied in diameter while their length is determined by the width of the film which has to be subjected to the heat-treatment. Typically, to avoid heat dispersion on the rollers' sides and therefore an unsuccessful heat-treatment on the film edges, the roller length will be larger than the film width. The rollers' diameter typically ranges from 10 to 100 cm, and generally is comprised between 10 and 40 cm. The rollers are typically made of stainless steel, but any material which is highly heat conductive and heat-resistant and which the thermoplastic material does not stick to could in theory be employed. The heating or cooling system may be provided e.g. by the use of internal spirals where a heated or cooled medium is circulated. The heating temperature is typically comprised between 50 and 95 °C, preferably comprised between 60 and 90 °C. The period for which the film is maintained at the heating treatment temperature should not exceed 7.5 s, as an extended period at the heat treatment temperature would in fact be detrimental to the film characteristics, unacceptably decreasing the free shrink of the film at 120 °C. The minimum period of heat treatment of the film, in order to achieve the desired results can be as low as 0.5 s, depending on the film thickness, specific composition and shrink properties of the starting film. Typically a period of time of at least 1 s and not more than 5, preferably not more than 4 s, is employed.

A cooling step (step g) immediately follows the heat treatment and it is carried out as quickly as possible. Generally the temperature of the film needs to be brought to a value lower than 35°C in less than 2 s, preferably in less than 1 s. While the temperature of the cooling rollers could be as low as possible, using appropriate fluids with a freezing point below 0 °C, it is generally preferred, in order to avoid condensation on the roller, cooling the rollers to a temperature of between 1 and 35 °C preferably between 10 and 30 °C. During the above heat treatment the film generally does not need to be constrained against shrinkage. Using in fact the preferred system for carrying out the heat treatment wherein the film web is almost tensioned by the process itself on its passing through the system of rollers at a relatively high speed, a tolerable reduction in the film width occurs of not more than 25%. Preferably, for the films of the present invention, this reduction is comprised between 5 and 25%, more preferably between 6 and 20%. This reduction can be calculated depending on the temperature of the heat-treatment and the speed of the line and taken into account at the extrusion and orientation of the starting film so that a film having the required width and thickness is obtained after the heat-treatment.

Sometimes, and mainly when the heat treatment is carried out by passing the film through a heated oven, it is also possible to avoid film shrinkage during the treatment by maintaining the film at substantially constant linear dimensions e.g., by a series of moving pinches holding the film edges, or by using a frame of the suitable dimensions.

The annealed films obtained by any of the above described processes may then be subjected to conventional after treatments--for example exposure to a corona discharge treatment to improve the bonding and print-receptive characteristics of the film surface.

In a third and in a fourth aspect, the present invention is directed to a so-called flowpack and to a tray lidding packaging process where the packaging film according to the first aspect of the present invention is used. In particular, the present invention is directed to so-called flowpack packaging method on a HFFS machine which comprises:

(a) providing a film according to the present invention
(b) running the film through a former thus forming a tube
(c) inserting a product, optionally placed in a container, into the tube,
(d) sealing the tube longitudinally,
(e) sealing and cutting the tube transversally at the beginning and at the end of the package, optionally gas-flushing the tube before closing it, and
(f) heat shrinking the package.

As an example a typical application of the heat-shrinkable films of the present invention is in the modified atmosphere packaging (MAP) of products preferably placed in a container e.g. a tray or on a flexible support member.

In this packaging system, also called flowpack, the product in the tray is wrapped into a film envelope made around the product, typically under a suitable and predetermined atmosphere. To create the envelope the flat film is first folded around a former and longitudinally sealed to form a tube. The tray with the product is placed in such a tube where the leading edge has been closed and gas flushed with the suitably selected gas or gas mixture. The excess gas is typically removed by a gentle pressure on top of the package and the open end of the envelope is then sealed and the package separated from the tubing. The loose package is then passed into a shrink tunnel, typically a hot air one set at a temperature suitable for shrinking such as a temperature of 100-150°C, to get shrinkage of the film and thus a tight package.

Under these conditions it is very important that the packaging film have a controlled shrink force at least in the transverse direction as a too high shrink force will lead to a more-or-less severe distortion of the tray that in any case would impair the appearance of the end package. Such a suitable shrink force is required in at least the transverse direction because it is particularly in the transverse direction that the excess material is limited and controlled by the size of the former, while in the longitudinal direction the two transverse seals closing the envelope can be made at a suitably selected distance from the tray edges. Furthermore the long sides of a tray are more susceptible to deformation than the short ones.

Lidding machines that can suitable for the so-called flowpack process include Ilapak Delta 2000 and 3000 or Ulma Baltic, Artic or Pacific.

A similar application for the films of the present invention is in the MAP packaging of products, like for instance pizza, where the product itself, e.g., in this case the pizza base, acts as the package support and where it is the product itself that may be distorted if films with a too high shrink force are employed in the so-called flowpack process.

In one embodiment of the present so-called flowpack packaging method on a HFFS machine, the film of the present invention is used in combination with an innermost gas-permeable packaging film, to provide packages such as those described for instance in EP0755875.

In a fourth aspect, the present invention is directed to a tray lidding packaging method which comprises:

(I) providing a tray with heat-sealable rims,
(II) loading said tray with the product to be packaged
(III) applying a lid on top of said tray, and

(IV) heat-sealing said lid to the tray rims, optionally with a modified atmosphere between said lid and said tray, providing a package and

(V) heat shrinking the package simultaneously or subsequently to the sealing step in which a coextruded gas-barrier heat-shrinkable packaging film according to the present invention is used as the lid.

Tray lidding of thermoformed or pre-made trays is another packaging process where a heat-shrinkable film with a controlled shrink force in the transverse direction is desired.

In this case the tray with the product loaded therein is brought into a lid sealing station, which comprises a lower chamber and an upper chamber, and a web of the film of the invention is provided over the top of the tray. The lower chamber and the upper chamber are then closed together, air in-between the tray and the lidding film is replaced by the suitable gas or gas blend, with or without prior air evacuation, and then the lidding film is sealed to the rim or the peripheral lip of the tray by means of the combination of a heated frame or platen above the lidding film and a similarly framed anvil supporting the tray rim or peripheral lip, that are pressed together. The lidding film is cut almost at the same time as the lid is sealed and shrinkage of the lid in the package typically occurs at the same time as the heat of the sealing elements in the lidding station is sufficient to get the desired shrinkage. However a further heat shrinking step may be added in case of need. Lidding machines that can suitable for the tray lidding process include for instance Multivac 400 and Multivac T550 by Multivac Sep. GmbH, Mondini Trave, E380, E390 or E590 by Mondini S.p.A., Ross A20 or Ross S45 by Ross-Reiser, Meca-2002 or Meca-2003 by Mecaplastic, the tray lidding machines manufactured by Sealpac and the like machines.

In one embodiment of the present tray lidding packaging method, the film of the present invention is used in combination with an innermost gas-permeable lidding film.

The present gas-barrier film may also be used in combination with a suitable heat-sealable oxygen permeable film, both in a so-called flowpack process such as the one described in EP0755875A1 or in the tray lidding process for meat packaging described in EP-B-690012 or in WO2006/87125 where a twin lidding film composed of an innermost oxygen permeable film and of an outermost gas-barrier film is used to close a high oxygen content meat package by heat-sealing said twin lidding film to the tray rim so as to bind a confined volume within the package containing at least an amount of oxygen effective to inhibit discoloration of the meat.

In a fifth aspect, the present invention is directed to a so-called flowpack package or to a tray lidded package comprising the packaging film of the first aspect.

Due to the optimal balance of the shrink properties of the film, the present packages have a very attractive appearance, being not distorted by the shrunk film and in the meantime being sufficiently tensioned even after storage at fridge temperatures.

The tray useful for the invention may have a rectangular shape or any other suitable shape, such as round, square, elliptical etc.

Commercially available trays are manufactured through common techniques such as thermoforming or injection moulding.

The tray can be made of a single layer or, preferably, of a multi-layer polymeric material.

In case of a single layer material, suitable polymers are for instance polystyrene, polypropylene, polyesters, high density polyethylene, poly(lactic acid), PVC and the like, either foamed or solid.

Also paper- or cardboard-based containers can be used in combination with the films according to the present invention.

Preferably the tray is provided with gas barrier properties. As used herein such term refers to a film or sheet of material which has an oxygen transmission rate of less than 200 $cm^3$ /$m^2$-day-bar, less than 150 $cm^3$ /$m^2$-day-bar, less than 100 $cm^3$ /$m^2$-day-bar as measured according to ASTM D-3985 at 23°C and 0% relative humidity.

Suitable materials for gas barrier monolayer thermoplastic trays are, for instance, polyesters, polyamides and the like.

However, in general, the tray is made of a multi-layer material. Suitable polymers are for instance ethylene homo- and co-polymers, propylene homo- and co-polymers, polyamides, polystyrene, polyesters, poly(lactic acid), PVC and the like. Part of the multi-layer material can be solid and part can be foamed.

For example, the tray can comprises at least one layer of a foamed polymeric material chosen from the group consisting of polystyrene, polypropylene, polyesters, poly(lactic acid), and the like.

The multi-layer material can be produced either by coextrusion of all the layers using well-known coextrusion techniques or by glue- or heat-lamination of, for instance, a rigid foamed or solid substrate with a thin film, usually called "liner".

The thin film can be laminated either on the side of the tray in contact with the product or on the side facing away from the product or on both sides. In the latter case the films laminated on the two sides of the tray can be the same or different. A layer of an oxygen barrier material, for instance (ethylene-co-vinyl alcohol) copolymer, is optionally present to increase the shelf-life of the packaged product.

Gas barrier polymers that can be employed for the gas barrier layer are PVDC, EVOH, polyamides, polyesters and blends thereof.

PVDC is any vinylidene chloride copolymers wherein a major amount of the copolymer comprises vinylidene chloride and a minor amount of the copolymer comprises one or more unsaturated monomers copolymerisable therewith, typically vinyl chloride, and alkyl acrylates or methacrylates (e.g. methyl acrylate or methacrylate) and the blends thereof in different proportions. Generally a PVDC barrier layer will contain plasticisers and/or stabilizers as known in the art.

The term polyesters as used herein refers to polymers obtained by the polycondensation reaction of dicarboxylic acids with dihydroxy alcohols. Suitable dicarboxylic acids are, for instance, terephthalic acid, isophthalic acid, 2,6-naphthalene dicarboxylic acid and the like. Suitable dihydroxy alcohols are for instance ethylene glycol, diethylene glycol, 1,4-butanediol, 1,4-cyclohexanedimethanol and the like. Examples of useful polyesters include poly(ethylene terephthalate), and copolyesters obtained by reacting one or more dicarboxylic acids with one or more dihydroxy alcohols.

The thickness of the gas barrier layer will be set in order to provide the tray with an oxygen transmission rate suitable for the specific packaged product.

Generally the heat-sealable layer will be selected among the polyolefins, such as ethylene homo- or co-polymers, propylene homo- or co-polymers, ethylene/vinyl acetate copolymers, ionomers, and the homo- and co-polyesters, e.g. PETG, a glycol-modified polyethylene terephthalate. As used herein, the term "copolymer" refers to a polymer derived from two or more types of monomers, and includes terpolymers. Ethylene homopolymers include high density polyethylene (HDPE) and low density polyethylene (LDPE). Ethylene copolymers include ethylene/alpha-olefin copolymers and ethylene/unsaturated ester copolymers. Ethylene/alpha-olefin copolymers generally include copolymers of ethylene and one or more comonomers selected from alpha-olefins having from 3 to 20 carbon atoms, such as 1-butene, 1-pentene, 1-hexene, 1-octene, 4-methyl-1-pentene and the like.

Ethylene/alpha-olefin copolymers generally have a density in the range of from about 0.86 to about 0.94 g/cm$^3$.

The term linear low density polyethylene (LLDPE) is generally understood to include that group of ethylene/alpha-olefin copolymers which fall into the density range of about 0.910 to about 0.930 g/cm$^3$ and particularly about 0.915 to about 0.925 g/cm$^3$. Sometimes linear polyethylene in the density range from about 0.930 to about 0.945 g/cm$^3$ is referred to as linear medium density polyethylene (LMDPE). For density lower than about 0.910 g/ cm$^3$, ethylene/alpha-olefin copolymers may be referred to as very low density polyethylene (VLDPE) and ultra-low density polyethylene (ULDPE). Ethylene/alpha-olefin copolymers may be obtained by either heterogeneous or homogeneous polymerization processes.

Another useful ethylene copolymer is an ethylene/unsaturated ester copolymer, which is the copolymer of ethylene and one or more unsaturated ester monomers. Useful unsaturated esters include vinyl esters of aliphatic carboxylic acids, where the esters have from 4 to 12 carbon atoms, such as vinyl acetate, and alkyl esters of acrylic or methacrylic acid, where the esters have from 4 to 12 carbon atoms.

Ionomers are copolymers of an ethylene and an unsaturated monocarboxylic acid having the carboxylic acid neutralized by a metal ion, such as zinc or, preferably, sodium.

Useful propylene copolymers include propylene/ethylene copolymers, which are copolymers of propylene and ethylene having a majority weight percent content of propylene, and propylene/ethylene/butene terpolymers, which are copolymers of propylene, ethylene and 1-butene.

Additional layers, such as adhesive layers, to better adhere the gas-barrier layer to the adjacent layers, may be present in the gas barrier material for the tray and are preferably present depending in particular on the specific resins used for the gas barrier layer.

In case of a multilayer material used to form the tray, part of this structure can be foamed and part can be unfoamed. For instance, the tray may comprise (from the outermost layer to the innermost food-contact layer) one or more structural layers, typically of a material such as foam polystyrene, foam polyester or foam polypropylene, or a cast sheet of e.g. polypropylene, polystyrene, poly(vinyl chloride), polyester or cardboard; a gas barrier layer and a heat-sealable layer.

Preferably, the tray is obtained from a sheet of foamed polymeric material having a thin film (called "liner") comprising at least one oxygen barrier layer and at least one surface sealing layer laminated onto the side facing the packaged product, so that the surface sealing layer of the film is the food contact layer the tray. A second liner, either barrier or non-barrier, can be laminated on the outer surface of the tray. Typical total thickness for the liner is comprised between 10 and 60 $\mu$m, preferably 15 to 40 $\mu$m.

In general, the typical trays used for lidding or skin applications containing foamed parts, have a total thickness lower than 8 mm, and for instance may be comprised between 0.5 mm and 7.0 mm and more frequently between 2.0 mm and 6.0 mm.

In case of rigid tray not containing foamed parts, the total thickness of the single-layer or multi-layer thermoplastic material is preferably lower than 2 mm, and for instance may be comprised between 0.2 mm and 1.2 mm and more frequently between 0.3 mm and 1.0 mm.

Particularly preferred trays to be used in combination with the films of the present invention for the so-called flowpack or tray lidding application are polypropylene-, polystyrene- or paper-based either foamed or unfoamed, having a barrier liner. Preferably the barrier resin of the liner is EVOH.

Optionally, the package may further comprise a soaker pad to absorb product drip loss.

In a sixth aspect, the present invention is directed to the use of the film according to the first aspect in a packaging process, preferably in flowpack packaging process on a HFFS machine or in a tray lidding process, where the film is optionally used in combination with an innermost gas-permeable packaging film.

In order to evaluate the films according to the present invention the following test methods have been used. Free shrink (%): the % free shrink, i.e., the irreversible and rapid reduction, as a percent, of the original dimensions of a sample subjected to a given temperature under conditions where nil restraint to inhibit shrinkage is present, was measured according to standard ASTM method D 2732, by immersing for 5 seconds specimens of the films (100-mm by 100-mm) into a bath of hot oil at 120°C. The % free shrink was measured in both the longitudinal (machine) and transverse directions of the film. Three specimens in LD and three specimens in TD were measured for each film.

The percent free shrink is defined, for each direction, as the unrestrained linear shrinkage of the film and it is calculated by the formula $[(L_o - L_f)/L_o] \times 100$ wherein $L_o$ is the initial length of the film specimen in mm before the test and $L_f$ is the length of the film specimen in mm after shrinking. The average results of this test are reported in Table 4.

Maximum shrink tension (kg/ cm$^2$) and residual cold shrink tension at 5°C (kg/ cm$^2$) were measured through an internal method.

The maximum shrink tension is the maximum value of the tension developed by the materials during the heating/shrinking process. Specimens of the films (2.54 cm x 14.0 cm, of which 10 cm are free for testing) are cut in the transverse (TD) direction of the film and clamped between two jaws, one of which is connected to a load cell. The two jaws keep the specimen in the centre of a channel into which an impeller blows heated or cold air and two thermocouples measure the temperature. The thermocouples are positioned as close as possible (less than 3 mm) to the specimen and in the middle of the same. The signal supplied by the thermocouples (which is the testing temperature) and the signal supplied by the load cell (which is the force) are sent to a computer where a software records these signals. The impeller starts blowing hot air and the force released by the sample is recorded in grams. The temperature is increased from 23°C to 180°C at a rate of about 2.5 °C/second by blowing heated air and then decreased from 180°C to 5°C at a rate of 1.5°C/second by blowing cold air.

The maximum shrink tension is calculated by dividing the maximum force value in kg (force at peak) by the specimen width (expressed in cm) and by the specimen average thickness (expressed in cm) and is expressed as kg/ cm$^2$.

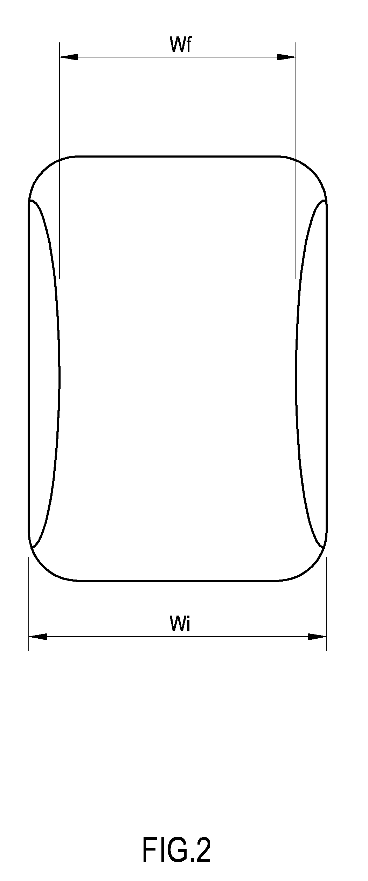

The residual cold shrink tension is calculated by dividing the force (in kg) exerted by the specimen at 5°C and the specimen width (in cm) and the specimen average thickness (in cm) and is expressed as kg/ cm$^2$. Three specimens were measured for each film. The average results of this test are reported in Table 4. Tray distortion (%) (Fig. 2).

The shrinkage of the film during the so-called flowpack packaging cycle usually deforms the tray in the transverse direction which corresponds to the long side of the tray.

The tray distortion was evaluated on 40 so-called flowpack packages manufactured according to the packaging test hereinafter described. Immediately after the packaging cycle, the tray width was measured in the point of the flange where the distortion was higher. The tray distortion was the percentage variation of the tray width vs. the original one and it was calculated according to the following formula:

$$((W_i - W_f) / W_i) \times 100$$

where $W_i$ is the initial maximum tray width in cm (for ex. 15 cm), $W_f$ is the minimum tray width measured on the package after the packaging cycle (for example 14 cm). The average of the tray distortion values measured on the 40 packages was then calculated. A maximum of 10% of tray distortion was considered "good", values lower than 5% were considered "very good".

Tray distortion values higher than 10% were considered not acceptable and indicated as "bad". Table 6 reports the result of these checks.

Pack Relaxation

The pack relaxation was evaluated by visual check of the package by observing if pleats or wrinkles or waving effect were visible on the film surface. The pack relaxation was evaluated on 40 so-called flowpack packages manufactured according to the packaging test hereinafter described.

The packages were put into the fridge at 4°C and observed after 20 minutes, 1 hour and 24 hours.

The packages were judged as "good" if very rare or no pleats were observed and "bad" in case of pleats affecting the film surface of the package.

For all the tested packages, the checks after 20 minutes, 1 hour and 24 hours gave identical results..Table 6 reports the result of these checks.

Drum effect

The "drum effect" refers to the sound that a package with a highly tensioned shrunk film wrapped around or sealed to a tray emits when hand beaten like the drums.

This test represents a simple but reliable tool for evaluating the tightness of a package and, indirectly, the residual cold shrink tension of the film: only tensioned films emits a drum-like sound otherwise no sound or only a muffled tone is produced when the film is beaten. Tests were performed on the packages after 20 minutes, 1 hour and 24 hours.

This test was evaluated on 40 so-called flowpack packages manufactured according to the packaging test hereinafter described.

Flowpack Packaging Test

Some films according to the present invention were used to manufacture some packages in order to evaluate both the tray distortion and the pack relaxation.

40 packages for each tested film and each tray were manufactured, each containing wood dummies 10 cm wide, 12 cm long and 2 cm thick. The machine used was ILAPAK DELTA LD (Long Dwell) with the following settings:

- Tubing length: 330 mm.
- Setting temperature of the transverse sealing bars (lower and upper) at 135°C.
- Setting temperature of the two pairs of longitudinal sealing rollers: 120°C for the first pair and 135°C for the second pair.
- Line speed: 40 ppm (pack per minute).
- Shrinking tunnel having 3 stations at three increasing temperatures, respectively: 130°C, 140°C, 145°C.
- Constant shrinking time in the 3 stations and corresponding to about 16m/min of film unwound from the roll.

The trays used for the test were two commercially trays. The first one was a white barrier foam tray (BFT) 1523-50 (where 15 represents the width in cm, 23 represents the length in cm and 50 represents the depth in mm) supplied by Cryovac, foamed polystyrene with a 5 layers liner having EVOH as barrier core layer, LLDPE as sealant and a thickness of the flange of about 3 mm.

The second tray was 1826M-25 (where 18 represents the width in cm, 26 represents the length in cm and 25 represents the depth in mm) supplied by Cryovac, a PP solid tray with a 5 layers liner having EVOH as barrier core layer, PE as sealant and a thickness of the flange of about 650 micron. The design of this tray was as reported in document WO2010003497 (double flange tray, having strengthening ribs extending substantially vertically along the rim).

Compression Test for trays

The force needed to deform the tray on the long side was measured through an internal method.

The tray was vertically positioned between two supports each attached to one of the two jaws of a dynamometer, clamping the tray on the long sides. Of these two jaws, the upper one was able to move in compression mode and the lower one was fixed. The supports attached to the jaws had a square 5 cm x 5 cm base where a recess 3 mm wide and 3 mm deep has been obtained in the center of each base. The flange of each of the two long sides was positioned into the recess of each of the two supports paying attention to center the middle point of the long side into the support and to keep the tray perfectly vertical over the plane of the instrument. The instrument was set up in compression mode (the upper jaw moving down) and the speed of compression was kept constant at 300 mm/min. A preload of 30 gr was applied before starting the test. Four different tests were performed at different prefixed strokes of, respectively, 8, 10, 12 and 14 mm, corresponding to the deformation of the tray in mm. The instrument recorded the force (gf) applied by the instrument to compress the tray. Six trays were measured for each tray type. The average force values (gf) were then reported in Table 5.

EXAMPLES

The Examples that follow are aimed at better illustrating some representative embodiments of the present invention. Unless otherwise indicated, all parts and percentages are by weight.

In the following examples the resins indicated in Table 1 below have been used.

Table 1

| Tradename / Supplier | Chemical Nature | Acronym | Parameters | | |
|---|---|---|---|---|---|
| | | | Analysis | Value | Units |
| In-house antiblock, antifog masterbatch, carrier resin Dowlex 2045S, Dow Chemical | Fatty Acid Esters and Silica in Polyethylene, Linear Low Density | LDPE1 | $SiO_2$ | 1.6 | % |
| | | | Antifog additive | 8% | % |
| | | | Density of Dowlex 2045S | 0.92 | g/cm$^3$ |
| | | | Melt Flow Rate of Dowlex 2045S (190°C /02.16 kg E) | | g/10 min |
| Eltex PF6220AA / Ineos | Linear Low Density Ethylene/Hexen e Copolymer | LLDPE2 | Density | 0.92 | g/cm$^3$ |
| | | | Melt Flow Rate (Cond. 190°C / 02.16 kg E) | 2 | g/10 min |
| ADMER AT 2146E / Mitsui Chemical | Maleic Anhydride-Modified Ethylene/Octene Copolymer | LLDPE-mod | Density | 0.915 | g/cm$^3$ |
| | | | Melt Flow Rate (Cond. 190°C / 02.16 kg E) | 1.3 | g/10 min |
| SOARNOL AT4403 / Nippon Gohsei | Hydrolyzed Ethylene/Vinyl Acetate Copolymer | EVOH | Comonomer content | 44 | % |
| | | | Crystallization point | 144 | °C |
| | | | Density | 1.14 | g/cm$^3$ |
| | | | Melt Flow Rate (Cond. 210°C / 02.16 kg E) | 3.5 | g/10 min |
| | | | Melting Point | 164 | °C |
| GRILON CF6S / EMS-Grivory | Polyamide - 6/12 - Poly (capro/lauryl) lactam | PA-6\12 | Density | 1.05 | g/cm$^3$ |
| | | | Melt Flow Rate (Cond. 190°C / 02.16 kg E) | 5.75 | g/10 min |
| | | | Melting Point | 130 | °C |
| | | | Viscosity solution | 1.79 | mPA.sec |

Several symmetrical structures B/E/A/E/C, in which B and C in each structure were identical and of identical thickness, and where also layers E had the same thickness and composition, were extruded through a round die, quickly quenched, setting the distance between the die exit and the forming shoe, irradiated, biaxially oriented out of hot air at a selected orientation temperature, annealed for 3.5 seconds, allowing a reduction of the film width in TD as reported in Table 3. In this table all the specific manufacturing conditions applied for each example are shown.

The annealing step was carried out on a processing unit as illustrated in Figure 1 consisting of a sequence of six stainless steel Gross Equatherm heated rollers and two cooled rollers, 16-cm in diameter and 203-cm in length, disposed in such a way that the total heating time for the film passing through and contacting the various heated rollers was about 3.5 seconds. The temperature was the same in the three heating zones, each comprising two rollers, and corresponds to the temperature indicated in Table 3 below under "annealing temperature".

Table 2 below reports the resins used for the layers of each film and their layer ratio (wherein the layer ratio is defined as the percentage ratio between the thickness of each layer and the total thickness of the film).

Table 2

|  | layer 1 (B) | layer 2 (E) | layer 3 (A) | layer 4 (E) | layer 5 (C) |
|---|---|---|---|---|---|
| composition | LLDPE1 25% LLDPE2 75% | LLDPE-mod 100% | EVOH 95% PA-6/12 5% | LLDPE-mod 100% | LLDPE1 25% LLDPE 2 75% |
| layer ratio (%) | 33 | 11 | 12 | 11 | 33 |

The composition of all the extruded films was the same as reported in Table 2. Table 3 summarizes the conditions applied during the manufacturing process of the present films. The total thickness in microns for each sample was reported in Table 4.

Table 3

| Ex n° | Die/ Forming Shoe Distance (cm) | Quench.T (°C) | cross-linking KGrays | Orient. T (°C) | Stretch. Ratio (LD, TD) | Cool. T (°C) | Annealing T(°C) | Width % variation (TD) |
|---|---|---|---|---|---|---|---|---|
| 1 | 10 | 10 | 45 | 111 | 3.5 | 30 | 80 | 20 |
| 2 | 10 | 10 | 75 | 111 | 3.9 | 10 | 60 | 6 |
| 3 | 10 | 20 | 45 | 115 | 3.5 | 10 | 60 | 6 |
| 4 | 10 | 20 | 45 | 111 | 3.9 | 30 | 60 | 6 |
| 5 | 10 | 10 | 75 | 115 | 3.5 | 30 | 60 | 6 |
| 6 | 10 | 10 | 45 | 115 | 3.9 | 10 | 80 | 20 |
| 7 | 8 | 20 | 45 | 115 | 3.5 | 30 | 80 | 20 |
| 8 | 10 | 20 | 75 | 115 | 3.9 | 30 | 80 | 20 |
| 9 | 8 | 10 | 45 | 115 | 3.9 | 30 | 60 | 6 |
| 10 | 8 | 10 | 75 | 111 | 3.9 | 30 | 80 | 20 |
| 11 | 8 | 20 | 45 | 111 | 3.9 | 10 | 80 | 20 |
| 12 | 8 | 10 | 75 | 115 | 3.5 | 10 | 80 | 20 |
| 13 | 10 | 20 | 75 | 111 | 3.5 | 10 | 80 | 20 |
| 14 | 8 | 20 | 75 | 111 | 3.5 | 30 | 60 | 6 |
| 15 | 8 | 20 | 75 | 115 | 3.9 | 10 | 60 | 6 |
| 16 | 8 | 10 | 45 | 111 | 3.5 | 10 | 60 | 6 |

The properties of the films of the above examples have been reported in the following Table 4.

Table 4

|  | transverse direction | | | | |
|---|---|---|---|---|---|
| Ex. n° | maximum shrink tension (kg/cm$^2$) | residual shrink tension 5°C (kg/cm$^2$) | ratio maximum and residual (5°C) shrink tensions | free shrink 120°C LD - TD (%) | total thickness (microns) |
| 1 | 15 | 24 | 0.6 | 67-53 | 31 |
| 2 | 31 | 25 | 1.2 | 64-61 | 22 |
| 3 | 28 | 24 | 1.2 | 66-61 | 28 |
| 4 | 34 | 27 | 1.3 | 65-62 | 21 |
| 5 | 28 | 25 | 1.2 | 69-59 | 26 |
| 6 | 23 | 26 | 0.9 | 68-56 | 25 |

(continued)

| Ex. n° | transverse direction | | | free shrink 120°C LD - TD (%) | total thickness (microns) |
|---|---|---|---|---|---|
| | maximum shrink tension (kg/cm$^2$) | residual shrink tension 5°C (kg/cm$^2$) | ratio maximum and residual (5°C) shrink tensions | | |
| 7 | 17 | 25 | 0.7 | 67-54 | 30 |
| 8 | 18 | 26 | 0.7 | 68-55 | 22 |
| 9 | 28 | 15 | 1.9 | 64-58 | 23 |
| 10 | 18 | 25 | 0.7 | 68-53 | 26 |
| 11 | 17 | 25 | 0.7 | 69-55 | 28 |
| 12 | 15 | 24 | 0.6 | 68-54 | 32 |
| 13 | 15 | 25 | 0.6 | 67-55 | 34 |
| 14 | 27 | 23 | 1.2 | 66-56 | 29 |
| 15 | 31 | 23 | 1.3 | 66-63 | 25 |
| 16 | 26 | 14 | 1.8 | 63-55 | 31 |

Some of the films of the above examples were used in a so-called flowpack packaging process as described in the so-called flowpack packaging test section.

As can be seen from Table 5, the two different trays used for the packaging tests had different rigidity according to the results of the compression test.

Table 5

| | | stroke | | | |
|---|---|---|---|---|---|
| | | 8 mm | 10 mm | 12 mm | 14 mm |
| force (gf) | BFT 1523-50 | 488 | 645 | 788 | 928 |
| | 1826M-25 | 922 | 1088 | 1255 | 1339 |

The packages so obtained were evaluated in terms of tray distortion and pack relaxation, whose results are reported in the following Table 6:

Table 6

| Ex. n° | BFT 1523-50 | | 1825M-25 | |
|---|---|---|---|---|
| | tray distortion | pack relaxation | tray distortion | pack relaxation |
| 2 | bad | good | very good | good |
| 6 | good | good | very good | good |
| 7 | good | good | very good | good |
| 9 | bad | good | very good | good |
| 16 | bad | good | very good | good |

For the softer tray BFT, Example 6 and 7 showed very good results both in terms of tray distortion and absence of pack relaxation. Example 2,9 and 16 gave an unacceptable tray distortion caused by a maximum shrink tension too high for this tray BFT. On the contrary, with the more rigid tray 1826M-25 (having a particular design are reported in WO2010003497), all the films gave very good results both in terms of tray distortion and absence of pack relaxation.

All the packages prepared with the films according to the present invention (Table 6) also gave satisfactory results in the drum effect test after storage in the fridge at 4°C after 20 minutes, 1 hour and 24 hours, namely they emitted a drum like sound when hand beaten like the drums because of a sufficient tightness of the film. The shrink properties of the films according to the present invention can be suitably tailored, depending on the rigidity of the container (influenced by the material, the design and the depth of the container) or on the rigidity of the product to be packaged, by modifying the manufacturing conditions of the films as herein described.

The films of the present invention are endowed with optimal shrink tension properties, high free shrink values, good processability at extrusion, orientation and annealing level, and very good optical properties.

Additionally, their preferred structure may be simpler compared to the structures proposed in WO2011029950 and annealing conditions easily applicable.

These films are useful for both tray lidding and "flowpack" applications and are able to guarantee very good package hermeticity.

By the process according to the second object of the present invention, it was possible to impart to the film a proper balance between the maximum shrink tension and the residual cold shrink tension which is customizable on the rigidity/softness and the design of the container or of the wrapped products. This accurate balance prevents package relaxation during its storage in cold conditions and allows maintaining its tight appearance without incurring in excessive tray or product distortion.

**Claims**

1. A coextruded gas-barrier heat-shrinkable packaging film comprising

   - a core layer (A) comprising an ethylene/vinyl alcohol copolymer,
   - two outer polyolefin layers (B) and (C), that may be equal or different,

   said film being **characterized by** a maximum shrink tension in the transverse direction not higher than 40 kg/cm2 and, additionally, by

   ii) a ratio between the maximum shrink tension in the transverse direction and the residual cold shrink tension at 5°C in the transverse direction comprised between 0.6 and 1.9.

2. A coextruded gas-barrier heat-shrinkable packaging film comprising

   - a core layer (A) comprising an ethylene/vinyl alcohol copolymer,
   - two outer polyolefin layers (B) and (C), that may be equal or different,

   said film being **characterized by** a maximum shrink tension in the transverse direction not higher than 40 $kg/cm^2$ and, additionally, by

   i) a residual cold shrink tension at 5°C in the transverse direction comprised between 10 and 27 $Kg/cm^2$, and
   ii) a ratio between the maximum shrink tension in the transverse direction and the residual cold shrink tension at 5°C in the transverse direction comprised between 0.6 and 1.9.

3. A coextruded gas-barrier heat-shrinkable packaging film comprising

   - a core layer (A) comprising an ethylene/vinyl alcohol copolymer,
   - two outer polyolefin layers (B) and (C), that may be equal or different,

   said film being **characterized by** a maximum shrink tension in the transverse direction not higher than 40 $kg/cm^2$ and the ratio between the maximum shrink tension in the transverse direction and the residual cold shrink tension at 5°C in the transverse direction is between 0.8 and 1.3 and the residual cold shrink tension at 5°C in the transverse direction is between 14 and 25 $kg/cm^2$ or between 20 and 27 $kg/cm^2$.

4. The film according to claim 1, wherein the maximum shrink tension in the transverse direction is comprised between 38 $kg/cm^2$ and 10 $kg/cm^2$, more preferably between 36 $kg/cm^2$ and 12 $kg/cm^2$, still more preferably between 34 $kg/cm^2$ and 14 $kg/cm^2$, once again more preferably between 30 $kg/cm^2$ and 18 $kg/cm^2$, and lastly more preferably between 25 $kg/cm^2$ and 20 $kg/cm^2$, and/or the ratio between the maximum shrink tension in the transverse direction and the residual cold shrink tension at 5°C in the transverse direction is between 0.7 and 1.4, between 0.8 and 1.3 and/or the residual cold shrink tension at 5°C in the transverse direction is between 14 and 25 $kg/cm^2$ or between 20 and 27 $kg/cm^2$.

**5.** A coextruded gas-barrier heat-shrinkable packaging film comprising

- a core layer (A) comprising an ethylene/vinyl alcohol copolymer,
- two outer polyolefin layers (B) and (C), that may be equal or different,

said film being **characterized by** a maximum shrink tension in the transverse direction comprised between 10 kg/cm$^2$ and 38 kg/cm$^2$ and the ratio between the maximum shrink tension in the transverse direction and the residual cold shrink tension at 5°C in the transverse direction is between 0.8 and 1.3.

**6.** A coextruded gas-barrier heat-shrinkable packaging film comprising

- a core layer (A) comprising an ethylene/vinyl alcohol copolymer,
- two outer polyolefin layers (B) and (C), that may be equal or different,

said film being **characterized by** a maximum shrink tension in the transverse direction comprised between 18 and 30 Kg/cm$^2$ and, additionally, by a residual cold shrink tension at 5°C in the transverse direction comprised between 10 and 27 Kg/cm$^2$.

**7.** A coextruded gas-barrier heat-shrinkable packaging film comprising

- a core layer (A) comprising an ethylene/vinyl alcohol copolymer,
- two outer polyolefin layers (B) and (C), that may be equal or different,

said film being **characterized by** a maximum shrink tension in the transverse direction not higher than 30 kg/cm$^2$ and, additionally, by a residual shrink tension at 5°C in the transverse direction comprised between 14 and 24 Kg/cm$^2$ and a ratio between the maximum shrink tension in the transverse direction and the residual cold shrink tension at 5°C in the transverse direction comprised between 0.9 and 1.9.

**8.** A coextruded gas-barrier heat-shrinkable packaging film comprising

- a core layer (A) comprising an ethylene/vinyl alcohol copolymer,
- two outer polyolefin layers (B) and (C), that may be equal or different,

said film being **characterized by** a residual shrink tension at 5°C in the transverse direction between 10 and 27 Kg/cm$^2$ and a ratio between the maximum shrink tension in the transverse direction and the residual cold shrink tension at 5°C in the transverse direction comprised between 0.8 and 1.9.

**9.** A coextruded gas-barrier heat-shrinkable packaging film comprising

- a core layer (A) comprising an ethylene/vinyl alcohol copolymer,
- two outer polyolefin layers (B) and (C), that may be equal or different,

said film being **characterized by** a maximum shrink tension in the transverse direction comprised between 10 kg/cm$^2$ and 38 kg/cm$^2$ and the ratio between the maximum shrink tension in the transverse direction and the residual cold shrink tension at 5°C in the transverse direction is between 0.8 and 1.3.

**10.** A coextruded gas-barrier heat-shrinkable packaging film comprising

- a core layer (A) comprising an ethylene/vinyl alcohol copolymer,
- two outer polyolefin layers (B) and (C), that may be equal or different,

said film being **characterized by** a maximum shrink tension in the transverse direction not higher than 38 kg/ cm$^2$, more preferably not higher than 36 kg/ cm$^2$ and even more preferably not higher than 34 kg/ cm$^2$, even more preferably not higher than 32 kg/ cm2, still more preferably not higher than 30 kg/ cm$^2$, most preferably not higher than 25 kg/ cm$^2$ and/or not lower than 10 kg/ cm$^2$, more preferably not lower than 12 kg/ cm$^2$ and even more preferably not lower than 14 kg/ cm$^2$, even more preferably not lower than 16 kg/ cm$^2$, still more preferably not lower than 18 kg/ cm$^2$, most preferably not lower than 20 kg/ cm$^2$.

**11.** A coextruded gas-barrier heat-shrinkable packaging film comprising

- a core layer (A) comprising an ethylene/vinyl alcohol copolymer,
- two outer polyolefin layers (B) and (C), that may be equal or different,

said film being **characterized by** a ratio between the maximum shrink tension in the transverse direction and the residual cold shrink tension (at 5°C) in the transverse direction between 0.7 and 1.4, more preferably between 0.8 and 1.3.

**12.** A coextruded gas-barrier heat-shrinkable packaging film comprising

- a core layer (A) comprising an ethylene/vinyl alcohol copolymer,
- two outer polyolefin layers (B) and (C), that may be equal or different,

said film being **characterized by** a maximum shrink tension in the transverse direction not lower than 18 kg/ $cm^2$ and the ratio between the maximum shrink tension in the transverse direction and the residual cold shrink tension (at 5°C) in the transverse direction is between 0.8 and 1.4

**13.** A coextruded gas-barrier heat-shrinkable packaging film comprising

- a core layer (A) comprising an ethylene/vinyl alcohol copolymer,
- two outer polyolefin layers (B) and (C), that may be equal or different,

said film being **characterized by** a residual cold shrink tension (at 5°C) in the transverse direction between 10 and 27 $Kg/cm^2$ or between 14 and 24 kg/ $cm^2$ or between 20 and 27 kg/ $cm^2$.

**14.** The film according to any one of the previous claims, further **characterized by**:

- a total free shrink at 120°C of at least 30%, preferably at least 50% and more preferably of at least 60%, and/or
- a total free shrink at 120°C below 45%, preferably below 40%, and/or
- a free shrink % at 120°C of at least 40%, preferably at least 50% in each of the transverse (TD) and longitudinal (LD) directions.

**15.** The film according to any one of the previous claims further **characterized by** an haze value between 1 % and 15 % preferably an haze not higher than 10%, more preferably a haze not higher than 8%, measured according to standard ASTM D 1003 and a gloss value (60° angle) between 100 g.u. and 140 g.u., preferably between 105 and 130 g.u measured according to standard ASTM D 2457.

**16.** The film according to any one of the previous claims wherein
the gas barrier layer (A) comprises at least 50% by weight, preferably at least 70%, more preferably at least 90%, with respect to the total weight of said layer, of one or more ethylene/vinyl alcohol copolymer (EVOH) resins; the outer B and C layers independently comprise at least 50% by weight, preferably at least 70%, more preferably at least 90%, with respect to the total weight of each of said layers, even more preferably they essentially consist of, one or more polyolefins, in which preferably said one or more polyolefins are selected among ethylene homopolymers, ethylene co-polymers, propylene homopolymers, propylene co-polymers and blends thereof, preferably in amount of at least 50% by weight, preferably at least 70%, more preferably at least 90%, with respect to the total weight of each of said layers, even more preferably they essentially consist of said polyolefins.

**17.** The film according to any of the previous claims, wherein layer (B) and layer (C) have a different polyolefin composition and wherein polyolefins for the second outer layer (C) are selected among ethylene homopolymers, ethylene-$\alpha$-olefin copolymers with a density of from about 0.895 to about 0.935 $g/cm^3$, ethylene-vinyl acetate copolymers, ionomers, polypropylene homopolymers, propylene-ethylene co-polymers, propylene-ethylene-butene copolymers, propylene-butene-ethylene copolymers, acrylates copolymers and their blends.

**18.** A process for the manufacturing of the films according to claims 1 to 17 comprising the steps of:

a) coextruding the resins and/or blends of resins of the various layers through a round or flat extrusion die, thus obtaining a tube or sheet;

b) quenching the tube or sheet at temperature comprised between 5 and 25°C;

c) optionally cross-linking the tube or sheet, preferably by electron beam treatment at a radiation dosage in the range from 5 to 150 KGy;

d) heating the tube or sheet at an orientation temperature comprised between 100 °C and 125 °C;

e) simultaneously stretching the heated tube or sheet at a stretching ratio of at least 2.5:1 and of at most 5:1 in each transverse (TD) and longitudinal (LD) direction;

f) annealing the stretched tube or sheet by heating it at a temperature comprised between 50 and 95 °C;

g) cooling the annealed tube or sheet at a temperature lower than 35°C.

19. The process of claim 18 wherein:

- quenching b) is done at temperatures comprised between 10°C and 20°C, preferably at temperatures lower than 15°C,

- orientation d) is done at temperatures comprised between 110° and 120°C,

- stretching ratio e) is done at a stretching ratio of at least 3.5 and at most 4:1 in each one of the transverse (TD) and longitudinal (LD) directions, preferably at a stretching ratio comprised between 3.5 and 3.9 in each one of the transverse (TD) and longitudinal (LD) directions,

- annealing f) is done by heating the film to a temperature comprised between 60 and 90°C and by by allowing a reduction in the film width from 5% to 25%, preferably from 6% to 20%.

20. A flowpack packaging method on a horizontal form-fill-seal machine HFFS, which comprises:

(a) providing a film according to anyone of claims 1 to 17

(b) running the film through a former thus forming a tube

(c) inserting a product, optionally placed in a container, into the tube,

(d) sealing the tube longitudinally,

(e) sealing and cutting the tube transversally at the beginning and at the end of the package, optionally gas-flushing the tube before closing it, and

(f) heat shrinking the package.

21. A tray lidding packaging method, which comprises:

(I) providing a tray with heat-sealable rims,

(II) loading said tray with the product to be packaged,

(III) applying a film according to anyone of claims 1 to 17 as a lid on top of said tray,

(IV) heat-sealing said lid to the tray rims, optionally with a modified atmosphere between said lid and said tray, providing a package and

(V) simultaneously or subsequently heat shrinking the package.

22. A flowpack package or a tray lidded package comprising the packaging film according to anyone of claims 1 to 17.

23. The method of one of claims 20 or 21 or the packages of claim 22, wherein the film according to any one of claims 1 to 17 is used in combination with an innermost gas-permeable packaging film.

24. Use of a film according to any one of claims 1 to 17 in a packaging process, preferably in a packaging process on a horizontal form-fill-shape machine HFFS or in a packaging process by tray lidding, wherein the film is optionally used in combination with an innermost gas-permeable packaging film.

FIG.1

FIG.2

Europäisches
Patentamt

European
Patent Office

Office européen
des brevets

## EUROPEAN SEARCH REPORT

**Application Number**

EP 16 16 3931

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 00/58093 A1 (CRYOVAC INC [US]; PIPER GRAHAM RICHARD [US]; RAMESH RAM KUMAR [US]) 5 October 2000 (2000-10-05) * page 15, line 27 - page 17, line 28; claims 1,7,8,15,19-23; example 1 * * page 12, line 21 - page 13, line 2 * ----- | 10 | INV. B32B27/08 B32B27/30 B32B27/32 B29K23/00 B29C55/02 B29C71/02 B29C55/16 |
| X | WO 99/59817 A1 (CRYOVAC INC [US]; PIPER GRAHAM R [US]; RAMESH RAM K [US]) 25 November 1999 (1999-11-25) * page 17, line 26 - page 19, line 22; claims 1,9,10,17-20; example 1 * * page 13, line 3 - line 23 * ----- | 10 | |
| X,D | WO 2011/029950 A1 (CRYOVAC INC [US]; RICCIO MARINA [IT]; FORLONI ROBERTO [IT]; URSINO FEL) 17 March 2011 (2011-03-17) * paragraphs [0010], [0012], [0016], [0017], [0076], [0089], [0095]; claims 1,4-15; figures; examples * ----- | 1-24 | |
| X | EP 0 744 285 A1 (GRACE W R & CO [US] CRYOVAC INC [US]) 27 November 1996 (1996-11-27) * page 11, line 26 - line 29; claims; examples * * page 9, line 9 - line 17 * * page 6, line 5 * ----- | 10,21-24 | TECHNICAL FIELDS SEARCHED (IPC) B32B |

The present search report has been drawn up for all claims

| Place of search | Date of completion of the search | Examiner |
|---|---|---|
| Munich | 10 August 2016 | Kanetakis, Ioannis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 16 3931

This annex lists the patent family members relating to the patent documents cited in the above-mentioned European search report.
The members are as contained in the European Patent Office EDP file on
The European Patent Office is in no way liable for these particulars which are merely given for the purpose of information.

10-08-2016

| Patent document cited in search report | | Publication date | Patent family member(s) | | Publication date |
|---|---|---|---|---|---|
| WO 0058093 | A1 | 05-10-2000 | AT | 339306 T | 15-10-2006 |
| | | | AU | 769630 B2 | 29-01-2004 |
| | | | AU | 3774400 A | 16-10-2000 |
| | | | CA | 2366445 A1 | 05-10-2000 |
| | | | DE | 60030706 T2 | 06-09-2007 |
| | | | EP | 1173329 A1 | 23-01-2002 |
| | | | EP | 1522501 A2 | 13-04-2005 |
| | | | ES | 2270820 T3 | 16-04-2007 |
| | | | NZ | 514245 A | 31-10-2003 |
| | | | US | 6294264 B1 | 25-09-2001 |
| | | | US | 2002015810 A1 | 07-02-2002 |
| | | | WO | 0058093 A1 | 05-10-2000 |
| WO 9959817 | A1 | 25-11-1999 | AR | 015787 A1 | 16-05-2001 |
| | | | AT | 246081 T | 15-08-2003 |
| | | | AU | 751578 B2 | 22-08-2002 |
| | | | AU | 4187199 A | 06-12-1999 |
| | | | CA | 2332145 A1 | 25-11-1999 |
| | | | DE | 69910025 D1 | 04-09-2003 |
| | | | DE | 69910025 T2 | 29-04-2004 |
| | | | DK | 1085981 T3 | 17-11-2003 |
| | | | EP | 1085981 A1 | 28-03-2001 |
| | | | ES | 2204133 T3 | 16-04-2004 |
| | | | NZ | 507822 A | 30-05-2003 |
| | | | US | 2002160129 A1 | 31-10-2002 |
| | | | WO | 9959817 A1 | 25-11-1999 |
| WO 2011029950 | A1 | 17-03-2011 | AU | 2010294162 A1 | 08-03-2012 |
| | | | BR | 112012005620 A2 | 21-06-2016 |
| | | | CA | 2770618 A1 | 17-03-2011 |
| | | | CN | 102497984 A | 13-06-2012 |
| | | | EP | 2477813 A1 | 25-07-2012 |
| | | | ES | 2548177 T3 | 14-10-2015 |
| | | | JP | 2013504452 A | 07-02-2013 |
| | | | KR | 20120068909 A | 27-06-2012 |
| | | | NZ | 598132 A | 28-03-2014 |
| | | | RU | 2012114426 A | 27-10-2013 |
| | | | US | 2012233965 A1 | 20-09-2012 |
| | | | WO | 2011029950 A1 | 17-03-2011 |
| | | | ZA | 201201604 B | 28-11-2012 |
| EP 0744285 | A1 | 27-11-1996 | CA | 2177241 A1 | 25-11-1996 |
| | | | EP | 0744285 A1 | 27-11-1996 |
| | | | US | 5914164 A | 22-06-1999 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 729900 A
- EP 797507 A
- WO 2011029950 A
- EP 881966 A
- WO 2010003497 A
- EP 2025596 A
- EP 0755875 A
- EP 0755875 A1
- EP 690012 B
- WO 200687125 A